(19) Europäisches Patentamt
European Patent Office
Office européen des brevets

(11) **EP 4 346 113 A1**

(12) **EUROPEAN PATENT APPLICATION**
published in accordance with Art. 153(4) EPC

(43) Date of publication:
**03.04.2024 Bulletin 2024/14**

(21) Application number: **22824025.5**

(22) Date of filing: **26.05.2022**

(51) International Patent Classification (IPC):
**H04B 7/0417** *(2017.01)*    **H04B 7/0456** *(2017.01)*

(52) Cooperative Patent Classification (CPC):
**H04B 7/0417; H04B 7/0452; H04B 7/0456; H04B 7/06**

(86) International application number:
**PCT/CN2022/095178**

(87) International publication number:
**WO 2022/262545 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2021 CN 202110664838**

(71) Applicant: **Huawei Technologies Co., Ltd.**
**Longgang**
**Shenzhen, Guangdong 518129 (CN)**

(72) Inventors:
• **GAO, Junhui**
**Shenzhen, Guangdong 518129 (CN)**
• **JIN, Huangping**
**Shenzhen, Guangdong 518129 (CN)**
• **REN, Xiang**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **METHOD AND APPARATUS FOR FEEDING BACK CHANNEL STATE INFORMATION**

(57)    This application discloses a channel state information feedback method and apparatus, to resolve a problem that system performance is poor because fed-back CSI is inaccurate due to CSI expiration in a conventional technology. The method includes: A terminal device receives a channel state information reference signal CSI-RS from a network device, and performs channel sounding based on the CSI-RS; and the terminal device feeds back channel state information to the network device based on a first codebook, where the first codebook is determined based on one or more transmit-end space-domain and frequency-domain column vectors and one or more receive-end space-domain and time-domain column vectors that represent a channel, or the first codebook is determined based on the one or more transmit-end space-domain and frequency-domain column vectors and one or more time-domain colunm vectors that represent the channel, the one or more transmit-end space-domain and frequency-domain column vectors indicate channel information in a combination of transmit-end space domain and frequency domain, and the one or more receive-end space-domain and time-domain colunm vectors indicate channel information in a combination of receive-end space domain and time domain.

FIG. 6

**Description**

**CROSS-REFERENCE TO RELATED APPLICATIONS**

This application claims priority to Chinese Patent Application No. 202110664838.0, filed with the China National Intellectual Property Administration on June 16, 2021 and entitled "CHANNEL STATE INFORMATION FEEDBACK METHOD AND APPARATUS", which is incorporated herein by reference in its entirety.

**TECHNICAL FIELD**

This application relates to the field of communications technologies, and in particular, to a channel state information feedback method and apparatus.

**BACKGROUND**

A 5th generation (5th generation, 5G) communications system has higher requirements in aspects such as a system capacity and spectral efficiency. In a 5G communications system, a massive multiple input multiple output (multiple input multiple output, MIMO) technology plays a critical role in spectral efficiency of the system. When a MIMO technology is used, a network device needs to perform modulation and coding and signal precoding when the network device sends data to a terminal device. How the network device sends the data to the terminal device needs to depend on channel state information (channel state information, CSI) fed back by the terminal device to the network device. Therefore, accuracy of the CSI plays a very important role in system performance.

In an actual system, there is a delay in CSI feedback, and consequently, CSI obtained by a network device has an expiration problem. To be specific, there is a delay between the CSI that is fed back by a terminal device and that is obtained by the network device and CSI of a current actual channel. As a result, precoding that is used for data sending and that is obtained through calculation by the network device based on the CSI fed back by the terminal device does not match precoding corresponding to the current actual channel. This causes system performance degradation.

**SUMMARY**

This application provides a channel state information feedback method and apparatus, to resolve a problem that system performance is poor because fed-back CSI is inaccurate due to CSI expiration in a conventional technology.

According to a first aspect, this application provides a channel state information feedback method. The method may include: A terminal device receives a channel state information reference signal (channel state information reference signal, CSI-RS) from a network device, and performs channel sounding based on the CSI-RS; and then the terminal device feeds back channel state information (channel state information, CSI) to the network device based on a first codebook, where the first codebook may be determined based on one or more transmit-end space-domain and frequency-domain column vectors and one or more receive-end space-domain and time-domain column vectors that represent a channel, or the first codebook may be determined based on the one or more transmit-end space-domain and frequency-domain column vectors and one or more time-domain column vectors that represent the channel, the one or more transmit-end space-domain and frequency-domain column vectors indicate channel information in a combination of a transmit-end space domain and frequency domain, and the one or more receive-end space-domain and time-domain column vectors indicate channel information in a combination of a receive-end space domain and time domain.

According to the method, the terminal device describes a time-varying characteristic of the channel by using the channel state information fed back based on the first codebook that includes Doppler information (that is, time-domain information). Changing of the Doppler information is slow within short sounding duration. Therefore, the network device can reconstruct, based on the first codebook, a channel present within sounding duration, predict a future channel change trend based on a time-varying trend of the reconstructed channel, and calculate a downlink precoding matrix based on a predicted channel to better match a current channel, thereby improving system performance. In addition, transmit-end space-domain and frequency-domain combined and receive-end space-domain and time-domain combined bases are constructed, so that channel projection sparsity can be increased, thereby reducing feedback overheads. The channel state information is fed back in four dimensions, namely, a transmit end, a frequency domain, a receive end, and a time domain, or in three dimensions, namely, a transmit end, a frequency domain, and a time domain, so that a channel characteristic can be represented more precisely. Therefore, the network device can perform channel prediction more accurately based on the channel state information fed back by the terminal device.

In a possible design, the first codebook may meet the following formula: $W = W_1 W_2 W_3^H$, where W is the first

codebook, $W_1$ is a transmit-end space-domain and frequency-domain combined base matrix, the transmit-end space-domain and frequency-domain combined base matrix includes the one or more transmit-end space-domain and frequency-domain colunm vectors, $W_3$ is a receive-end space-domain and time-domain combined base matrix, the receive-end space-domain and time-domain combined base matrix includes the one or more receive-end space-domain and time-domain column vectors, and $W_2$ is a complex coefficient matrix corresponding to the transmit-end space-domain and frequency-domain combined base matrix and the receive-end space-domain and time-domain combined base matrix. In this way, the transmit-end space-domain and frequency-domain combined and receive-end space-domain and time-domain combined bases are constructed, so that channel projection sparsity can be increased, thereby reducing feedback overheads. The channel state information is fed back in four dimensions, namely, the transmit end, the frequency domain, the receive end, and the time domain, so that the channel characteristic can be represented more precisely, and further, the network device can perform channel prediction more accurately based on the channel state information fed back by the terminal device.

In a possible design, the first codebook may meet the following formula: $W = W_1 W_4 W_5^H$, where W is the first codebook, $W_1$ is a transmit-end space-domain and frequency-domain combined base matrix, the transmit-end space-domain and frequency-domain combined base matrix includes the one or more transmit-end space-domain and frequency-domain column vectors, $W_5$ is a time-domain base matrix, the time-domain base matrix includes the one or more time-domain column vectors, and $W_4$, is a complex coefficient matrix corresponding to the transmit-end space-domain and frequency-domain combined base matrix and the time-domain base matrix. In this way, the transmit-end space-domain and frequency-domain combined and receive-end space-domain and time-domain combined bases are constructed, so that channel projection sparsity can be increased, thereby reducing feedback overheads. The channel state information is fed back in three dimensions, namely, the transmit end, the frequency domain, and the time domain, so that the channel characteristic can be represented more precisely, and further, the network device can perform channel prediction more accurately based on the channel state information fed back by the terminal device.

In a possible design, the transmit-end space-domain and frequency-domain combined base matrix $W_1$ may meet the following formula: $W_1 = W_{11} W_{12}$, where $W_{11}$ is a transmit-end space-domain and frequency-domain combined basic base matrix, each column vector in $W_{11}$ corresponds to one transmit-end space-domain and frequency-domain combined basic base, $W_{12}$ is a transmit-end space-domain and frequency-domain combined basic base correction matrix, and a column vector length of $W_{11}$ is related to a quantity of antennas of the network device and a quantity of frequency-domain resource units occupied by the CSI-RS. According to the method, joint compression in the transmit-end space domain and frequency domain increases sparsity of a projection coefficient of the channel for the transmit-end space-domain and frequency-domain combined base matrix, thereby reducing feedback overheads.

In a possible design, the receive-end space-domain and time-domain combined base matrix $W_3$ may meet the following formula: $W_3 = W_{31} W_{32}$, where $W_{31}$ is a receive-end space-domain and time-domain combined basic base matrix, each column vector in $W_{31}$ corresponds to one receive-end space-domain and time-domain combined basic base, $W_{32}$ is a receive-end space-domain and time-domain combined basic base correction matrix, and a column vector length of $W_{31}$ is related to a quantity of antennas of the terminal device and the sounding duration. According to the method, joint compression in the receive-end space domain and time domain can increase sparsity of projection of the channel for the receive-end space-domain and time-domain combined base matrix to a specific extent, thereby reducing feedback overheads.

In a possible design, one frequency-domain basic base in the transmit-end space-domain and frequency-domain combined basic base matrix may correspond to a plurality of transmit-end space-domain basic bases, or one transmit-end space-domain basic base in the transmit-end space-domain and frequency-domain combined base matrix may correspond to a plurality of frequency-domain basic bases.

In a possible design, $W_{11}$ may meet the following formula: $W_{11} = W_f^* \otimes W_{tx}$, where $W_f^*$ is a conjugate matrix of $W_f$, $W_f$ indicates a frequency-domain basic base, and $W_{tx}$ indicates a transmit-end space-domain basic base.

In a possible design, one time-domain basic base in the receive-end space-domain and time-domain combined basic base matrix may correspond to a plurality of receive-end space-domain basic bases, or one receive-end space-domain basic base in the receive-end space-domain and time-domain combined base matrix may correspond to a plurality of time-domain basic bases.

In a possible design, $W_{31}$ may meet the following formula: $W_{31} = W_t^* \otimes W_{rx}$, where $W_t^*$ is a conjugate matrix of $W_t$, $W_t$ indicates a time-domain basic base, and $W_{rx}$ indicates a receive-end space-domain basic base.

In a possible design, a dimension of $W_2$ may be $L * N_1$, L represents a selected quantity of transmit-end space-domain and frequency-domain combined bases, L is a value preconfigured or predefined by the network device, $N_1$ represents a selected quantity of receive-end space-domain and time-domain combined bases, and $N_1$ is a value pre-

configured or predefined by the network device. In this way, codebook compression in four dimensions, namely, the transmit-end space domain, the frequency domain, the receive-end space domain, and the time domain, can be implemented, so that channel information is fed back more accurately in the four dimensions for channel change prediction, and feedback overheads are also reduced.

In a possible design, a dimension of $W_4$ may be $L * N_d$, $L$ represents a selected quantity of transmit-end space-domain and frequency-domain combined bases, $L$ is a value preconfigured or predefined by the network device, and $N_d$ represents the sounding duration. In this way, codebook feedback in three dimensions, namely, the transmit-end space domain, the frequency domain, and the time domain, can be implemented for channel change prediction; moreover, the receive-end space domain dimension is removed, so that a quantity of feedback coefficients can be reduced, thereby reducing feedback overheads.

In a possible design, a feedback period of the transmit-end space-domain and frequency-domain combined basic base correction matrix $W_{12}$ may be T1, T1 is a value preconfigured or predefined by the network device, T1 is greater than a period of feeding back first information, and the first information is information that is in the CSI and that is other than information fed back based on $W_{12}$. For example, the first information may include but is not limited to a base complex coefficient matrix. According to the method, the terminal device feeds back the transmit-end space-domain and frequency-domain combined basic base correction matrix based on the longer period, and feeds back the base complex coefficient matrix based on the shorter period, to reduce feedback overheads.

In a possible design, the terminal device receives second information from the network device, where the second information indicates a codebook type used by the terminal device for channel sounding. In this way, the terminal device and the network device can know the used codebook type in advance, to feed back the channel state information based on a codebook of the codebook type.

According to a second aspect, this application provides a channel state information feedback method. The method may include: A network device sends a channel state information reference signal CSI-RS to a terminal device, and the network device receives channel state information CSI that is fed back by the terminal device based on a first codebook, where the first codebook is determined based on one or more transmit-end space-domain and frequency-domain column vectors and one or more receive-end space-domain and time-domain column vectors that represent a channel, or the first codebook is determined based on the one or more transmit-end space-domain and frequency-domain column vectors and one or more time-domain column vectors that represent the channel, the one or more transmit-end space-domain and frequency-domain column vectors indicate channel information in a combination of a transmit-end space domain and frequency domain, and the one or more receive-end space-domain and time-domain column vectors indicate channel information in a combination of a receive-end space domain and time domain.

According to the method, the terminal device describes a time-varying characteristic of the channel by using the channel state information fed back based on the first codebook that includes Doppler information (that is, time-domain information). Changing of the Doppler information is slow within short sounding duration. Therefore, the network device can reconstruct, based on the first codebook, a channel present within sounding duration, predict a future channel change trend based on a time-varying trend of the reconstructed channel, and calculate a downlink precoding matrix based on a predicted channel to better match a current channel, thereby improving system performance. In addition, transmit-end space-domain and frequency-domain combined and receive-end space-domain and time-domain combined bases are constructed, so that channel projection sparsity can be increased, thereby reducing feedback overheads. The channel state information is fed back in four dimensions, namely, a transmit end, a frequency domain, a receive end, and a time domain, or in three dimensions, namely, a transmit end, a frequency domain, and a time domain, so that a channel characteristic can be represented more precisely. Therefore, the network device can perform channel prediction more accurately based on the channel state information fed back by the terminal device.

In a possible design, the first codebook may meet the following formula: $W = W_1 W_2 W_3^H$, where W is the first codebook, $W_1$ is a transmit-end space-domain and frequency-domain combined base matrix, the transmit-end space-domain and frequency-domain combined base matrix includes the one or more transmit-end space-domain and frequency-domain column vectors, $W_3$ is a receive-end space-domain and time-domain combined base matrix, the receive-end space-domain and time-domain combined base matrix includes the one or more receive-end space-domain and time-domain column vectors, and $W_2$ is a complex coefficient matrix corresponding to the transmit-end space-domain and frequency-domain combined base matrix and the receive-end space-domain and time-domain combined base matrix. In this way, the transmit-end space-domain and frequency-domain combined and receive-end space-domain and time-domain combined bases are constructed, so that channel projection sparsity can be increased, thereby reducing feedback overheads. The channel state information is fed back in four dimensions, namely, the transmit end, the frequency domain, the receive end, and the time domain, so that the channel characteristic can be represented more precisely, and further, the network device can perform channel prediction more accurately based on the channel state information fed back by the terminal device.

In a possible design, the first codebook may meet the following formula: $W = W_1 W_4 W_5^H$, where W is the first codebook, $W_1$ is a transmit-end space-domain and frequency-domain combined base matrix, the transmit-end space-domain and frequency-domain combined base matrix includes the one or more transmit-end space-domain and frequency-domain column vectors, $W_5$ is a time-domain base matrix, the time-domain base matrix includes the one or more time-domain column vectors, and $W_4$ is a complex coefficient matrix corresponding to the transmit-end space-domain and frequency-domain combined base matrix and the time-domain base matrix. In this way, the transmit-end space-domain and frequency-domain combined and receive-end space-domain and time-domain combined bases are constructed, so that channel projection sparsity can be increased, thereby reducing feedback overheads. The channel state information is fed back in three dimensions, namely, the transmit end, the frequency domain, and the time domain, so that the channel characteristic can be represented more precisely, and further, the network device can perform channel prediction more accurately based on the channel state information fed back by the terminal device.

In a possible design, the transmit-end space-domain and frequency-domain combined base matrix $W_1$ may meet the following formula: $W_1 = W_{11} W_{12}$, where $W_{11}$ is a transmit-end space-domain and frequency-domain combined basic base matrix, each column vector in $W_{11}$ corresponds to one transmit-end space-domain and frequency-domain combined basic base, $W_{12}$ is a transmit-end space-domain and frequency-domain combined basic base correction matrix, and a column vector length of $W_{11}$ is related to a quantity of antennas of the network device and a quantity of frequency-domain resource units occupied by the CSI-RS. According to the method, joint compression in the transmit-end space domain and frequency domain increases sparsity of a projection coefficient of the channel for the transmit-end space-domain and frequency-domain combined base matrix, thereby reducing feedback overheads.

In a possible design, the receive-end space-domain and time-domain combined base matrix $W_3$ may meet the following formula: $W_3 = W_{31} W_{32}$, where $W_{31}$ is a receive-end space-domain and time-domain combined basic base matrix, each column vector in $W_{31}$ corresponds to one receive-end space-domain and time-domain combined basic base, $W_{32}$ is a receive-end space-domain and time-domain combined basic base correction matrix, and a column vector length of $W_{31}$ is related to a quantity of antennas of the terminal device and the sounding duration. According to the method, joint compression in the receive-end space domain and time domain can increase sparsity of projection of the channel for the receive-end space-domain and time-domain combined base matrix to a specific extent, thereby reducing feedback overheads.

In a possible design, one frequency-domain basic base in the transmit-end space-domain and frequency-domain combined basic base matrix may correspond to a plurality of transmit-end space-domain basic bases, or one transmit-end space-domain basic base in the transmit-end space-domain and frequency-domain combined base matrix may correspond to a plurality of frequency-domain basic bases.

In a possible design, $W_{11}$ may meet the following formula: $W_{11} = W_f^* \otimes W_{tx}$, where $W_f^*$ is a conjugate matrix of $W_f$, $W_f$ indicates a frequency-domain basic base, and $W_{tx}$ indicates a transmit-end space-domain basic base.

In a possible design, one time-domain basic base in the receive-end space-domain and time-domain combined basic base matrix may correspond to a plurality of receive-end space-domain basic bases, or one receive-end space-domain basic base in the receive-end space-domain and time-domain combined base matrix may correspond to a plurality of time-domain basic bases.

In a possible design, $W_{31}$ may meet the following formula: $W_{31} = W_t^* \otimes W_{rx}$, where $W_t^*$ is a conjugate matrix of $W_t$, $W_t$ indicates a time-domain basic base, and $W_{rx}$ indicates a receive-end space-domain basic base.

In a possible design, a dimension of $W_2$ may be $L * N_1$, L represents a selected quantity of transmit-end space-domain and frequency-domain combined bases, L is a value preconfigured or predefined by the network device, $N_1$ represents a selected quantity of receive-end space-domain and time-domain combined bases, and $N_1$ is a value preconfigured or predefined by the network device. In this way, codebook compression in four dimensions, namely, the transmit-end space domain, the frequency domain, the receive-end space domain, and the time domain, can be implemented, so that channel information is fed back more accurately in the four dimensions for channel change prediction, and feedback overheads are also reduced.

In a possible design, a dimension of $W_4$ may be $L * N_d$, L represents a selected quantity of transmit-end space-domain and frequency-domain combined bases, L is a value preconfigured or predefined by the network device, and $N_d$ represents the sounding duration. In this way, codebook feedback in three dimensions, namely, the transmit-end space domain, the frequency domain, and the time domain, can be implemented for channel change prediction; moreover, the receive-end space domain dimension is removed, so that a quantity of feedback coefficients can be reduced, thereby reducing feedback overheads.

In a possible design, a feedback period of the transmit-end space-domain and frequency-domain combined basic base correction matrix $W_{12}$ may be T1, T1 is a value preconfigured or predefined by the network device, T1 is greater than a period of feeding back first information, and the first information is information that is in the CSI and that is other than information fed back based on $W_{12}$. For example, the first information may include but is not limited to a base complex coefficient matrix. According to the method, the terminal device feeds back the transmit-end space-domain and frequency-domain combined basic base correction matrix based on the longer period, and feeds back the base complex coefficient matrix based on the shorter period, to reduce feedback overheads.

In a possible design, the network device sends second information to the terminal device, where the second information indicates a codebook type used by the terminal device for channel sounding. In this way, the terminal device and the network device can know the used codebook type in advance, to feed back the channel state information based on a codebook of the codebook type.

According to a third aspect, this application provides a channel state information feedback method. The method may include: A terminal device receives a CSI-RS from a network device, and performs channel sounding based on the CSI-RS; and then the terminal device feeds back channel state information to the network device, where the channel state information indicates one or more first bases, and the one or more first bases are used to generate, based on a preset base generation method, one or more second bases indicating the channel state information. In this way, a base of the terminal device can be aligned with a base of the network device, so that channel reconstruction and precoding can be performed more accurately, thereby improving system performance.

In a possible design, the one or more first bases are one or more space-domain and frequency-domain combined statistical covariance base column vectors obtained through quantization.

In a possible design, the preset base generation method is an orthogonalization method preconfigured or predefined by the network device. In this way, the aligned bases of the terminal device and the network device can be obtained accurately by using the orthogonalization method preconfigured or predefined by the network device.

According to a fourth aspect, this application provides a channel state information feedback method. The method may include: A network device sends a CSI-RS to a terminal device; and the network device receives channel state information fed back by the terminal device, where the channel state information indicates one or more first bases, and the one or more first bases are used to generate, based on a preset base generation method, one or more second bases indicating the channel state information. In this way, a base of the terminal device can be aligned with a base of the network device, so that channel reconstruction and precoding can be performed more accurately, thereby improving system performance.

In a possible design, the one or more first bases are one or more space-domain and frequency-domain combined statistical covariance base column vectors obtained through quantization.

In a possible design, the preset base generation method is an orthogonalization method preconfigured or predefined by the network device. In this way, the aligned bases of the terminal device and the network device can be obtained accurately by using the orthogonalization method preconfigured or predefined by the network device.

According to a fifth aspect, this application further provides a channel state information feedback apparatus. The channel state information feedback apparatus has a function of implementing the terminal device in any one of the first aspect or the possible design examples of the first aspect or any one of the third aspect or the possible design examples of the third aspect. The function may be implemented by hardware, or may be implemented by executing corresponding software by hardware. The hardware or software includes one or more modules corresponding to the foregoing function.

In a possible design, a structure of the channel state information feedback apparatus includes a transceiver unit and a processing unit. These units may perform corresponding functions of the terminal device in any one of the first aspect or the possible design examples of the first aspect or any one of the third aspect or the possible design examples of the third aspect. For details, refer to the detailed descriptions in the method examples. Details are not described herein again.

In a possible design, a structure of the channel state information feedback apparatus includes a transceiver and a processor, and optionally, further includes a memory. The transceiver is configured to receive and send information, signals, or data, and is configured to communicate and interact with another device in a communications system. The processor is configured to support the channel state information feedback apparatus in performing corresponding functions of the terminal device in any one of the first aspect or the possible design examples of the first aspect or any one of the third aspect or the possible design examples of the third aspect. The memory is coupled to the processor, and stores program instructions and data that are necessary for the channel state information feedback apparatus.

In a possible design, a structure of the channel state information feedback apparatus includes a memory and a processor. The processor is configured to support the channel state information feedback apparatus in performing corresponding functions of the terminal device in any one of the first aspect or the possible design examples of the first aspect or any one of the third aspect or the possible design examples of the third aspect. The memory is coupled to the processor, and stores program instructions and data that are necessary for the channel state information feedback apparatus.

According to a sixth aspect, this application further provides a channel state information feedback apparatus. The channel state information feedback apparatus has a function of implementing the network device in any one of the second aspect or the possible design examples of the second aspect or any one of the fourth aspect or the possible design examples of the fourth aspect. The function may be implemented by hardware, or may be implemented by executing corresponding software by hardware. The hardware or software includes one or more modules corresponding to the foregoing function.

In a possible design, a structure of the channel state information feedback apparatus includes a transceiver unit and a processing unit. These units may perform corresponding functions of the network device in any one of the second aspect or the possible design examples of the second aspect or any one of the fourth aspect or the possible design examples of the fourth aspect. For details, refer to the detailed descriptions in the method examples. Details are not described herein again.

In a possible design, a structure of the channel state information feedback apparatus includes a transceiver and a processor, and optionally, further includes a memory. The transceiver is configured to receive and send information, signals, or data, and is configured to communicate and interact with another device in a communications system. The processor is configured to support the channel state information feedback apparatus in performing corresponding functions of the network device in any one of the second aspect or the possible design examples of the second aspect or any one of the fourth aspect or the possible design examples of the fourth aspect. The memory is coupled to the processor, and stores program instructions and data that are necessary for the channel state information feedback apparatus.

In a possible design, a structure of the channel state information feedback apparatus includes a memory and a processor. The processor is configured to support the channel state information feedback apparatus in performing corresponding functions of the terminal device in any one of the first aspect or the possible design examples of the first aspect or any one of the third aspect or the possible design examples of the third aspect. The memory is coupled to the processor, and stores program instructions and data that are necessary for the channel state information feedback apparatus.

According to a seventh aspect, an embodiment of this application provides a communications system. The communications system may include the terminal device and the network device that are mentioned above.

According to an eighth aspect, an embodiment of this application provides a computer-readable storage medium. The computer-readable storage medium stores program instructions. When the program instructions are run on a computer, the computer is enabled to perform the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect in embodiments of this application. For example, the computer-readable storage medium may be any usable medium accessible to a computer. By way of example and without any limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be used for carrying or storing expected program code in a form of an instruction or a data structure and that can be accessed by a computer.

According to a ninth aspect, an embodiment of this application provides a computer program product that includes computer program code or instructions. When the computer program product is run on a computer, the computer is enabled to implement the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

According to a tenth aspect, this application further provides a chip, including a processor. The processor is coupled to a memory, and is configured to read and execute program instructions stored in the memory, so that the chip implements the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

For each of the fifth aspect to the tenth aspect and technical effects that may be achieved by each of the fifth aspect to the tenth aspect, refer to the foregoing descriptions of the technical effects that may be achieved by any one of the first aspect or the possible solutions of the first aspect, any one of the second aspect or the possible solutions of the second aspect, any one of the third aspect or the possible solutions of the third aspect, or any one of the fourth aspect or the possible solutions of the fourth aspect. Details are not described herein again.

**BRIEF DESCRIPTION OF DRAWINGS**

FIG. 1 is a schematic diagram of an architecture of a communications system according to this application;

FIG. 2 is a schematic diagram of communication between a network device and a terminal device according to this application;

FIG. 3 is a schematic diagram of a basic procedure of CSI measurement by a network device and a terminal device according to this application;

FIG. 4 is a schematic diagram of a CSI feedback delay according to this application;

FIG. 5 is a schematic diagram of a CSI measurement and feedback procedure according to this application;

FIG. 6 is a flowchart of a channel state information feedback method according to this application;

FIG. 7 is a schematic diagram of a codebook according to this application;

FIG. 8 is a schematic diagram of another codebook according to this application;

FIG. 9 is a flowchart of another channel state information feedback method according to this application;

FIG. 10 is a schematic diagram of a structure of a channel state information feedback apparatus according to this application; and

FIG. 11 is a diagram of a structure of a channel state information feedback apparatus according to this application.

## DESCRIPTION OF EMBODIMENTS

The following further describes this application in detail with reference to the accompanying drawings.

Embodiments of this application provide a channel state information feedback method and apparatus, to resolve a problem that system performance is poor because fed-back CSI is inaccurate due to CSI expiration in a scenario of a time-varying channel in a conventional technology. The method and apparatus in this application are based on a same technical idea. Because problem resolving principles of the method and apparatus are similar, mutual reference may be made between implementations of the apparatus and method, and repeated parts are not described again.

The following explains and describes some terms in this application, to facilitate understanding by a person skilled in the art.

(1) Precoding

When a channel state is known, a network device may process a to-be-sent signal by using a precoding matrix that matches a channel resource, so that a precoded to-be-sent signal is adapted to a channel, thereby improving received signal quality (for example, a signal to interference plus noise ratio (signal to interference plus noise ratio, SINR)) of a receive end (also referred to as a receiving device). This can reduce complexity of inter-channel impact elimination by the receive end. It can be learned that, with a precoding technology, a transmit end (also referred to as a sending end or a sending device) and a plurality of receive ends can perform transmission on a same time-frequency resource, that is, multi-user multiple input multiple output (multiple user multiple input multiple output, MU-MIMO) can be implemented. It should be noted that related descriptions about the precoding technology are merely used as an example for ease of understanding, and are not intended to limit the protection scope of embodiments of this application. In a specific implementation process, alternatively, a transmit end may perform precoding in another manner. For example, when channel information (for example, but not limited to, a channel matrix) cannot be learned of, precoding is performed by using a preset precoding matrix or through weighting processing. For brevity, specific content thereof is not described in this specification.

(2) Precoding matrix indicator (precoding matrix indicator, PMI)

A precoding matrix indicator may indicate a precoding matrix, and a network device obtains the precoding matrix based on the PMI. The precoding matrix may be a precoding matrix that is determined by a terminal device based on a channel matrix of each frequency-domain unit. The frequency-domain unit is a unit of a frequency-domain resource, and may represent different frequency-domain resource granularities. For example, the frequency-domain unit may include but is not limited to a subband (subband), a resource block (resource block, RB), a subcarrier, a resource block group (resource block group, RBG), or a precoding resource block group (precoding resource block group, PRG). In addition, a frequency-domain length of one frequency-domain unit may be R times a subband or frequency-domain subband, where R is less than or equal to 1. For example, a value of R may be 1 or 1/2. The channel matrix may be determined by the terminal device through channel estimation or the like or based on channel reciprocity. However, it should be understood that a specific method for determining the precoding matrix by the terminal device is not limited to the foregoing descriptions. For a specific implementation, refer to a conventional technology. For brevity, examples are not listed herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on a covariance matrix of the channel matrix. It should be understood that the foregoing listed manners of determining the precoding matrix are merely examples, and shall not constitute any limitation on this application. For a manner of determining the precoding matrix, refer to a conventional technology. For brevity, examples are not listed herein.

(3) Channel state information (channel state information, CSI)

Channel state information is information that is used to describe a channel attribute of a communications link and that is reported by a receive end (for example, a terminal device) to a transmit end (for example, a network device) in a wireless communications system. A CSI report may include but is not limited to a precoding matrix indicator (PMI), a rank indicator (rank indicator, RI), a channel quality indicator (channel quality indicator, CQI), a channel state information reference signal (channel state information reference signal, CSI-RS) resource indicator (CSI-RS resource indicator, CRI), a layer indicator (layer indicator, LI), and the like. It should be understood that the specific CSI content listed above is merely examples for description, and shall not constitute any limitation on embodiments of this application. The CSI may include one or more of the foregoing listed items, or may include information that is other than the foregoing listed items and that is used to represent the CSI. This is not limited in embodiments of this application.

(4) Antenna port

An antenna port may also be referred to as a port, and may be understood as a transmit antenna identified by a receive end, or a transmit antenna that can be distinguished in space. One antenna port may be preconfigured for each virtual antenna. Each virtual antenna may be a weighted combination of a plurality of physical antennas. Each antenna port may correspond to one reference signal. Therefore, each antenna port may be referred to as a port of one reference signal, for example, a channel state information reference signal (channel state information reference signal, CSI-RS) port or a sounding reference signal (sounding reference signal, SRS) port. In embodiments of this application, an antenna port may be a transceiver unit (transceiver unit, TxRU).

(5) Sounding duration

In embodiments of this application, a terminal device may perform channel sounding within a time segment based on an indication of a network device. The time segment may be referred to as sounding duration. A time length of the time segment may be indicated by the network device by using signaling. For example, the time length is notified by using higher layer signaling (for example, a radio resource control (radio resource control, RRC) message). Alternatively, the sounding duration may be predefined, for example, defined in a protocol. This is not limited in this application.

The network device may notify, by using signaling, the terminal device to start to perform channel sounding. For example, the network device may notify the terminal device of a start time and/or duration of the time segment by using signaling, or the network device may trigger, by using signaling, the terminal device to start to perform channel sounding. The terminal device may receive, for a plurality of times within the sounding duration, reference signals used for channel sounding, and may perform channel sounding based on the reference signals received for the plurality of times, to feed back a time-varying characteristic of a channel to the network device. The sounding duration may be short, for example, may be defined in slots (slot) or milliseconds (ms). For example, the sounding duration may be 20 slots, 5 ms, 10 ms, or 20 ms. Alternatively, the sounding duration may be long, for example, may be defined in seconds. For example, the sounding duration may be 10 seconds.

It should be understood that, that the network device notifies, by using signaling, the terminal device to start to perform channel sounding does not mean that the terminal device keeps performing channel sounding since the start time or a trigger time indicated by the network device. The network device uses the signaling merely to notify the terminal device that the terminal device may perform channel sounding. The terminal device may perform channel sounding based on the received reference signals within one time window after the start time or the trigger time. A magnitude of the time window is the sounding duration.

It should be further understood that the feeding back herein is feeding back the time-varying characteristic of the channel by the terminal device, but this does not mean that the terminal device gives no other feedback. For example, the terminal device may give a feedback within the time segment based on a feedback manner of a type II codebook. For brevity, examples are not listed herein. It should be noted that another feedback given by the terminal device within the time segment is a process independent of the feedback of the time-varying characteristic of the channel in this application.

(6) Time-domain base

A time-domain base may also be referred to as a time-domain vector, and may be used to represent a change of a channel in time domain. One time-domain vector may represent one rule by which a channel changes with time. A wireless channel is a time-varying channel, and suffers attenuation losses from different paths. For example, a time-frequency doubly selective fading channel affected by both frequency selective fading caused by multipath delay spread and time selective fading caused by a Doppler frequency shift is a typical time-varying channel.

A Doppler frequency shift (Doppler shift) may be a frequency shift that is between a transmit frequency and a receive frequency and that is caused by relative movement between a terminal device and a network device, and a difference between the receive frequency and the transmit frequency is referred to as the Doppler frequency shift. Usually, a Doppler frequency shift $f_d$ may be defined as $f_d = v \times f_c \times \cos\theta / c$, where v is a moving speed of a terminal device, $f_c$ is a carrier frequency, $\theta$ is an incident angle of a multipath signal, and c is a speed of light. During specific implementation, incident angles of different transmission paths may be considered for $\theta$. Because the plurality of paths have different $\theta$, the different transmission paths correspond to different Doppler frequency shifts, causing Doppler spread (Doppler spread). Generally, a magnitude of a Doppler frequency shift represents impact of a moving speed on a time-domain change speed of a channel.

In embodiments of this application, one time-domain vector may correspond to one Doppler frequency shift. Therefore, different time-domain vectors may be used to represent rules of time-domain channel changes caused by Doppler frequency shifts corresponding to different transmission paths. Usually, for ease of describing a time-domain change of a channel, the time-domain channel may be projected to a Doppler domain, and the change is represented through weighting of exponential functions of several slowly varying Doppler frequency shifts.

It should be understood that the time-domain vector is defined merely for ease of distinguishing from the following space-domain vector and frequency-domain vector, and shall not constitute any limitation on this application. This application does not exclude a possibility of defining another name for the time-domain vector in a future protocol to represent a meaning that is the same as or similar to that of the time-domain vector. For example, the time-domain vector may also be referred to as a Doppler vector.

Optionally, the time-domain vector may be one or more of a discrete Fourier transform (Discrete Fourier Transform, DFT) vector, an oversampled DFT vector, a wavelet transform (wavelet transform, WT) vector, or an oversampled WT vector. This is not limited in this application.

(7) Space-domain base

A space-domain base may also be referred to as a space-domain vector, or referred to as a beam (beam) vector, an angle vector, or the like. All elements in a space-domain vector may represent weights of all antenna ports (antenna port). Based on weights of all antenna ports represented by all elements in a space-domain vector, signals of the antenna ports are linearly superposed, so that an area in which signal strength is high can be formed in a direction in space. A reference signal is precoded based on a space-domain vector, so that the transmitted reference signal can have specific spatial directivity. Therefore, a process of precoding a reference signal based on a space-domain vector may also be considered as a process of space-domain (space-domain) precoding.

Optionally, a space-domain vector is taken from a DFT matrix. Each column vector in the DFT matrix may be referred to as a DFT vector. In other words, a space-domain vector may be a DFT vector. A space-domain vector may be alternatively, for example, a two-dimensional (2 dimensions, 2D) DFT vector or an oversampled 2D-DFT vector defined in a type II (type II) codebook in the NR protocol TS 38.214 release 15 (release 15, R15). For brevity, details are not described herein.

(8) Frequency-domain base

A frequency-domain base may be referred to as a frequency-domain vector, a delay vector, or the like. A frequency-domain base is a vector that may be used to represent a frequency-domain change rule of a channel. Each frequency-domain vector may represent one change rule. When transmitted through a wireless channel, a signal may arrive at a receive antenna through a plurality of paths from a transmit antenna. A multipath delay causes frequency selective fading, which is a frequency-domain channel change. Therefore, different frequency-domain vectors may be used to represent rules of frequency-domain channel changes caused by delays on different transmission paths. However, a phase change of a channel in each frequency-domain unit is related to a delay, and it can be learned from Fourier transform that a time delay of a signal in time domain may be equivalent to a phase gradient in frequency domain. Therefore, a frequency-domain vector may also be referred to as a delay vector. In other words, a frequency-domain vector may also be used to represent a delay characteristic of a channel.

That a reference signal is precoded based on a frequency-domain vector may essentially mean that phase rotation is performed on each frequency-domain unit in frequency domain based on an element in the frequency-domain vector, to pre-compensate, through reference signal precoding, for a frequency selective characteristic caused by a multipath delay. Therefore, a process of precoding a reference signal based on a frequency-domain vector may be considered as a process of frequency-domain precoding.

In embodiments of this application, a frequency-domain vector may be used to construct, with the foregoing space-domain vector, a plurality of combinations of space-domain vectors and frequency-domain vectors, also referred to as space-frequency vector pairs for short, to construct a precoding vector.

(9) Transmit-end space-domain and frequency-domain joint compression

Transmit-end space-domain and frequency-domain joint compression means to use a transmit-end space-domain and frequency-domain vector (for example, a transmit-end space-domain and frequency-domain column vector or a transmit-end space-domain and frequency-domain row vector) to represent a channel represented by a transmit-end space-domain-frequency-domain matrix (a transmit-end space-domain vector matrix and a frequency-domain vector matrix). In other words, a transmit-end space-domain and frequency-domain vector may indicate a channel in a combination of transmit-end space domain and frequency domain. A downlink channel is used as an example. It is assumed that a terminal device has a single antenna, and the channel is a single-polarized channel. The channel H may be represented by a formula (1), that is, H meets the formula (1):

$$H = SCF^H \tag{1}$$

In the formula (1), $H \in \mathbb{C}^{M \times N}$, $S \in \mathbb{C}^{M \times L}$, $F \in \mathbb{C}^{N \times L}$, and $C \in \mathbb{C}^{L \times L}$, that is, C is a diagonal matrix of L×L, where M is a quantity of antenna ports of a network device, L is a quantity of paths, N is a quantity of frequency units, and $\mathbb{C}$ represents a complex number set in this specification.

$H$ in the formula (1) is expanded by row, that is, a channel represented by a transmit-end space-domain-frequency-domain matrix is represented by a transmit-end space-domain and frequency-domain column vector, to obtain the following:

$$h = \begin{bmatrix} H(1,:)^T \\ H(2,:)^T \\ ... \\ H(M,:)^T \end{bmatrix} = \begin{bmatrix} H(1,:) & H(2,:) & ... & H(M,:) \end{bmatrix}^T,$$

where (m,:) represents the $m^{th}$ row of the matrix, and m=1, ..., M.

$H$ in the formula (1) is expanded by column, that is, a channel represented by a transmit-end space-domain-frequency-domain matrix is represented by a transmit-end space-domain and frequency-domain column vector, to obtain the following:

$$h = \begin{bmatrix} H(:,1) \\ H(:,2) \\ ... \\ H(:,L) \end{bmatrix},$$

where (:, $l$) represents the $l^{th}$ column of the matrix, and $l$=1, ..., L.

When $H$ in the formula (1) is represented by a column vector, a column vector equivalent to the formula (1) may meet a formula (2):

$$h = \left( F^* \odot S \right) c \in \mathbb{C}^{MN \times 1} \tag{2}$$

Herein, h may also be considered as a representation of a channel in a combined transmit-end space-frequency domain (a combined domain of a transmit-end space domain and frequency domain). For ease of description, in this specification, h is referred to as a transmit-end space-domain and frequency-domain channel. In the formula (2), c = diag(C), where diag(C) represents a column vector that includes a diagonal element of the matrix $C$; and $F^* \odot S \in \mathbb{C}^{MN \times L}$, where $\odot$ represents a Khatri-Rao product. For example, in $A \odot B = [a_1 \otimes b_1 \dots a_n \otimes b_n]$, $a_i$ is the $i^{th}$ column of A, $\otimes$ is a Kronecker product (Kronecker product), $b_i$ is the $i^{th}$ column of B, and i is an integer greater than 0. $F^*$ is a conjugate matrix of F, and the $l(l = 1, \dots, L)^{th}$ column of the matrix $F^* \odot S$ may meet a formula (3):

$$\left(F^* \odot S\right)(:,l) = (F(:,l))^* \otimes S(:,l) \in \mathbb{C}^{MN \times 1} \qquad (3)$$

Herein, $(:, l)$ represents the $l^{th}$ column of the matrix.

For the channel h represented by a column vector, statistical covariance matrix SVD thereof meets a formula (4):

$$R_h = \mathbb{E}\left\{hh^H\right\} = U\Lambda U^H \qquad (4)$$

Herein, $\mathbb{E}$ represents obtaining an expectation for a random number/matrix, U is an eigenvector of a channel $R_h$, an eigenvalue corresponding to each column of U is an element on a diagonal of a diagonal matrix $\Lambda$, and elements on the diagonal of $\Lambda$ are arranged in descending order. In this case, an instantaneous channel may meet a formula (5):

$$h = U\hat{h} \qquad (5)$$

Herein, $\hat{h}$ is a projection of h on U, $\hat{h}_p = U_p{}^H h$ is a projection of h on $U_p$, and $U_p = U(:, 1: P)$, indicating that $U_p$ is a matrix constituted by selecting one to P columns from U.

Alternatively, $h \approx U_p\hat{h}_p$, that is, $U_p\hat{h}_p$ represents an approximation of h.

It should be understood that the channel has a characteristic of being sparse in an angle-delay domain, that is, only some of elements in $\hat{h}$ are non-zero or have large values. In addition, an angle-delay change speed is low, that is, it may be considered that U remains basically unchanged within a period of time, and values of $\hat{h}$ at different moments, for example, $\hat{h}_1, \hat{h}_2 \dots \hat{h}_t$, change with time. Joint compression in the transmit-end space domain and frequency domain enhances sparsity of a projection coefficient of the channel $H$ on a transmit-end space-domain and frequency-domain combined base, so that precision of CSI reconstruction by the network device can be increased, thereby improving system performance.

(10) Transmit-end space-domain and frequency-domain combined base

A transmit-end space-domain and frequency-domain combined base may also be referred to as a transmit-end space-domain and frequency-domain combined vector, and is a vector that may be used to represent a rule by which a channel changes in a combination of a transmit-end space domain and frequency domain. In embodiments of this application, if two polarization directions of a channel correspond to a same transmit-end space-domain and frequency-domain combined base, a dimension of a transmit-end space-domain and frequency-domain combined vector matrix is $((M_1 \times M_2) \times N_{sb}) \times L$, where $M_1$ is a quantity of antenna ports in a horizontal direction of transmission by a network device, $M_2$ is a quantity of antenna ports in a vertical direction of transmission by the network device, $N_{sb}$ is a quantity of frequency units, and L is a quantity of paths or a selected quantity of transmit-end space-domain and frequency-domain combined bases. It should be understood that, if two polarization directions of a channel correspond to different transmit-end space-domain and frequency-domain combined bases, a dimension of a transmit-end space-domain and frequency-domain combined vector matrix is $(2 \times (M_1 \times M_2) \times N_{yb}) \times L$. For example, a transmit-end space-domain and frequency-domain combined vector matrix may be obtained by performing SVD on a covariance matrix of a channel h represented by a column vector in transmit-end space-domain and frequency-domain joint compression.

(11) Receive-end space-domain and time-domain combined base

A receive-end space-domain and time-domain combined base may also be referred to as a receive-end space-domain and time-domain combined base, and is a vector that may be used to represent a rule by which a channel changes in a combination of a receive-end space domain and time domain. In embodiments of this application, a dimension of a receive-end space-domain and time-domain combined vector matrix is $(M_3 \times Nd) \times N_1$, where $M_3$ is a quantity of antenna ports of a terminal device, $N_d$ represents sounding duration, and $N_1$ is a selected quantity of receive-end space-domain and time-domain combined bases. For example, a receive-end space-domain and time-domain combined vector matrix may be obtained by performing SVD on a covariance matrix of a channel represented by a column vector in receive-end space-domain and time-domain joint compression.

(12) Complex coefficient matrix

A complex coefficient matrix may also be referred to as a projection coefficient matrix, and is used to represent a projection coefficient of a channel on a transmit-end space-domain and frequency-domain combined base matrix and a receive-end space-domain and time-domain combined base matrix, or is used to represent a projection coefficient of a channel on a transmit-end space-domain and frequency-domain combined base matrix and a time-domain base matrix, where a complex coefficient includes an amplitude and a phase.

It should be noted that matrix and vector transformation is used at a plurality of places in embodiments of this application. For ease of description, a unified description is provided herein. A superscript T represents transpose, for example, $A^T$ represents transpose of a matrix (or vector) A. A superscript H represents conjugate transpose, for example, $A^H$ represents conjugate transpose of a matrix (or vector) A. A superscript * represents conjugate, for example, A' represents conjugate of a matrix (or vector) A. For brevity, descriptions of a same or similar case are omitted below.

In the descriptions of this application, words such as "first" and "second" are merely intended for differentiated description, and shall not be understood as an indication or implication of relative importance or an indication or implication of a sequence.

In the descriptions of this application, "at least one" means one or more, and "a plurality of" means two or more.

The expression "and/or" describes an association relationship between associated objects and represents that three relationships may exist. For example, A and/or B may represent the following three cases: Only A exists, both A and B exist, and only B exists. The character "/" generally indicates an "or" relationship between associated objects.

To describe the technical solutions in embodiments of this application more clearly, the following describes in detail, with reference to the accompanying drawings, the channel state information feedback method and apparatus provided in embodiments of this application.

The channel state information feedback method provided in embodiments of this application may be applied to various communications systems, provided that the communications system includes a device that needs to send transmission direction indication information and another device that needs to receive the indication information and determine, based on the indication information, a transmission direction used within a specific time. For example, the communications system may be an Internet of things (internet of things, IoT), a narrowband Internet of things (narrowband internet of things, NB-IoT), or long term evolution (long term evolution, LTE), may be a 5th generation (5G) communications system, may be an LTE and 5G hybrid architecture, or may be a 5G NR system or a new communications system emerging in future development of communications. The 5G communications system in this application may include at least one of a non-standalone (non-standalone, NSA) 5G communications system and a standalone (standalone, SA) 5G communications system. Alternatively, the communications system may be a public land mobile network (public land mobile network, PLMN), a device-to-device (device-to-device, D2D) network, a machine-to-machine (machine to machine, M2M) network, or another network.

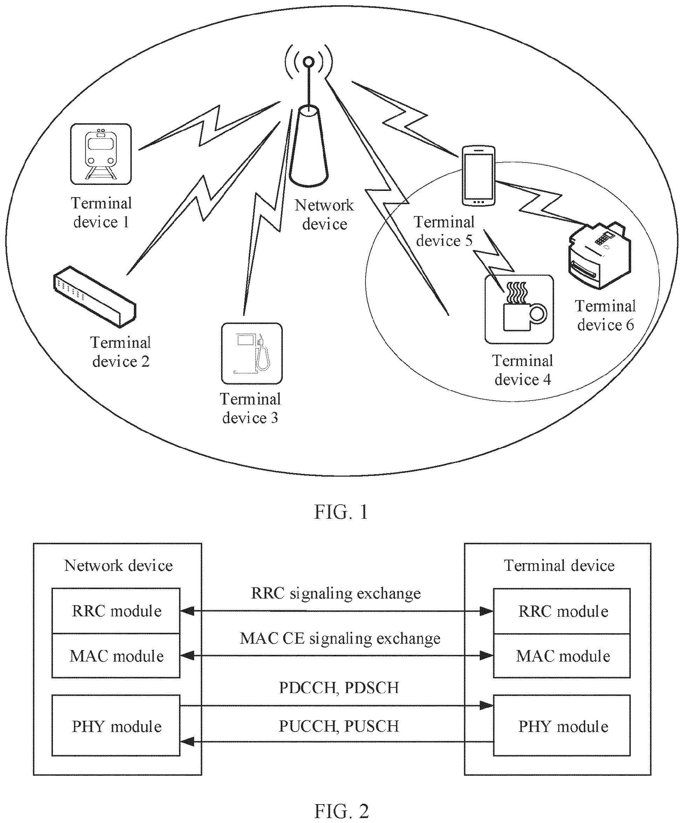

FIG. 1 is a schematic diagram of an architecture of a possible communications system to which the channel state information feedback method provided in this application is applicable. The communications system may include a network device and at least one terminal device, for example, a terminal device 1 to a terminal device 6 that are shown in FIG. 1. In the communications system, the terminal device 1 to the terminal device 6 may send uplink data or the like to the network device, and the network device needs to receive the uplink data or the like sent by the terminal device 1 to the terminal device 6. In addition, a terminal device 4 to the terminal device 6 may also constitute a communications subsystem. The network device may send downlink information or the like to the terminal device 1, a terminal device 2, a terminal device 5, and the like. The terminal device 5 may also send downlink information or the like to the terminal device 4 and the terminal device 6 based on a D2D technology. It should be understood that FIG. 1 is merely a schematic diagram, and this application does not impose any specific limitation on a type of the communications system or a quantity, types, or the like of devices included in the communications system.

The network device may be a device having a wireless transceiver function, or a chip that may be disposed in such a network device. The network device includes but is not limited to a gNodeB (generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like, or may be a network node that constitutes a gNB or a transmission point, such as a baseband unit (BBU) or a distributed unit (distributed unit, DU).

In some deployments, the gNB may include a central unit (central unit, CU) and a DU. The gNB may further include a radio frequency unit (radio unit, RU). The CU implements some of functions of the gNB, and the DU implements some of the functions of the gNB. For example, the CU implements functions of radio resource control (radio resource control, RRC) and packet data convergence protocol (packet data convergence protocol, PDCP) layers, and the DU implements functions of radio link control (radio link control, RLC), media access control (media access control, MAC), and physical (physical, PHY) layers. RRC layer information is finally changed to PHY layer information, or is converted from PHY layer information. Therefore, in such an architecture, higher layer signaling, such as RRC layer signaling or PHCP layer signaling, may also be considered as being sent by the DU or sent by the DU and the RU. It can be understood that the network device may be a CU node, a DU node, or a device that includes a CU node and a DU node. In addition, the CU may be classified as a network device in an access network RAN, or the CU may be classified as a network device in a core network CN. This is not limited.

The terminal device may also be referred to as user equipment (user equipment, UE), an access terminal, a subscriber unit, a subscriber station, a mobile station, a remote station, a remote terminal, a mobile device, a user terminal, a terminal, a wireless communications device, a user agent, or a user apparatus. The terminal device in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a smart wearable device (smart glasses, a smartwatch, a smart headset, or the like), a wireless terminal in a smart home (smart home), or the like, or may be a chip, a chip module (or chip system), or the like that can be disposed in the foregoing device. An application scenario is not limited in embodiments of this application. In this application, a terminal device having a wireless transceiver function and a chip that may be disposed in such a terminal device are collectively referred to as a terminal device.

For example, communication between the network device and the terminal device may be shown in FIG. 2. Specifically, the network device and the terminal device may exchange RRC signaling by using an RRC module. The network device and the terminal device may exchange media access control control element (media access control control element, MAC CE) signaling by using a MAC module. The network device and the terminal device may exchange uplink/downlink control signaling, for example, a physical uplink control channel (physical uplink control channel, PUCCH)/physical downlink control channel (physical downlink control channel, PDCCH), and exchange uplink/downlink data signaling, for example, a physical uplink shared channel (physical uplink shared channel, PUSCH)/physical downlink shared channel (physical downlink shared channel, PDSCH), by using a PHY module.

The network architecture and service scenario described in embodiments of this application are intended to describe the technical solutions in embodiments of this application more clearly, and constitute no limitation on the technical solutions provided in embodiments of this application. A person of ordinary skill in the art may know that, with evolution of the network architecture and emergence of new service scenarios, the technical solutions provided in embodiments of this application are also applicable to similar technical problems.

Currently, a 5G communications system has higher requirements in aspects such as a system capacity and spectral efficiency. In a 5G communications system, a massive MIMO technology plays a critical role in spectral efficiency of the system. When a MIMO technology is used, a network device needs to perform modulation and coding and signal precoding when the network device sends data to a terminal device. How the network device sends the data to the terminal device needs to depend on CSI fed back by the terminal device to the network device. Therefore, accuracy of the CSI plays a very important role in system performance.

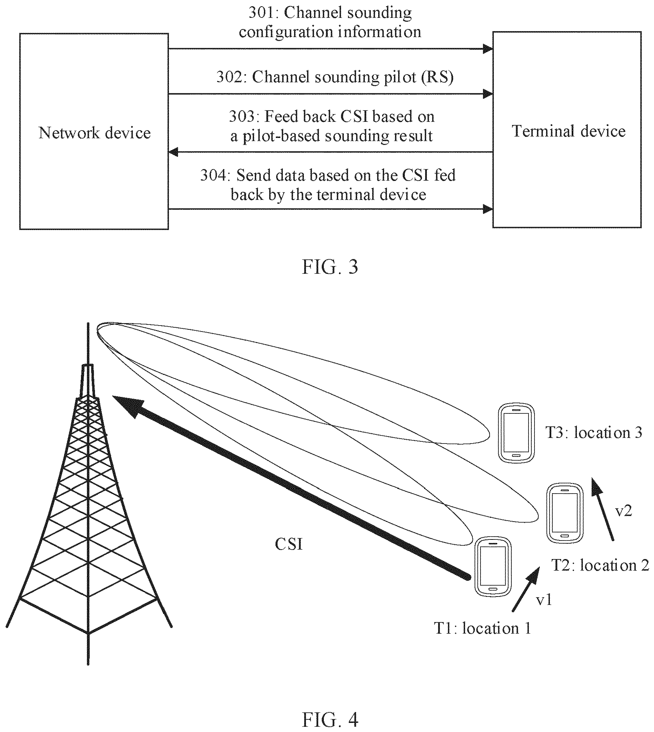

A basic procedure in which a network device and a terminal device perform CSI measurement may be shown in FIG. 3, and may specifically include the following steps:

Step 301: The network device sends channel sounding configuration information to the terminal device, where the channel sounding configuration information is used for channel sounding configuration, for example, configuration of a reference signal and a sounding time.

Step 302: The network device sends a channel sounding pilot (which may also be referred to as a reference signal (reference signal, RS)) to the terminal device, where the pilot is used for channel sounding.

Step 303: The terminal device performs channel sounding based on the pilot sent by the network device, performs calculation such as channel estimation to obtain CSI, and feeds back the CSI to the network device (for example, by using a codebook). For example, the fed-back CSI may include a specific parameter such as a rank indicator (rank indicator, RI), a channel quality indicator (channel quality information, CQI), or a precoding matrix indicator (precoding matrix indicator, PMI).

Step 304: The network device sends data based on the CSI fed back by the terminal device. In step 304, the network device may determine, based on the CSI fed back by the terminal device in step 303, a related configuration for sending the data. For example, the network device determines, based on the RI, a quantity of streams of data transmission to the terminal device; the network device determines, based on the CQI fed back by the terminal device, a modulation order and a channel-coding code rate of data transmission to the terminal device; and the network device determines, based on the PMI fed back by the terminal device, precoding of data transmission to the terminal device.

In an actual system, there is usually a delay in CSI feedback, that is, a specific time is required from CSI measurement by a terminal device to obtaining, by a network device, CSI fed back by the terminal device. Consequently, the CSI obtained by the network device has an aging (aging) problem. To be specific, the CSI that is fed back by the terminal device and that is obtained by the network device is not CSI of a current actual channel, but CSI in a past period of time. As a result, precoding that is used for data sending and that is obtained through calculation by the network device based on the CSI fed back by the terminal device may be different from precoding calculated based on the actual channel. This may cause a system performance loss. In a scenario of a time-varying channel, a delay of CSI feedback causes an obvious performance loss, where a user mobile scenario is one of common scenarios. For example, as shown in FIG. 4, a terminal device is at a location 1 at a moment T1; the UE moves based on a speed and direction of $\vec{v1}$, and arrives at a location 2 at a moment T2; and then the terminal device moves based on a speed and direction of $\vec{v2}$, and arrives at a location 3 at a moment T3. The terminal device corresponds to different channels at the location 1, the location 2, and the location 3. Therefore, CSI fed back by the terminal device at the moment T1 is inconsistent with channels corresponding to the location 2 and the location 3. As a result of a CSI expiration problem, precoding of a user cannot match an actual channel condition, and consequently, more inter-user interference is introduced, greatly reducing system performance.

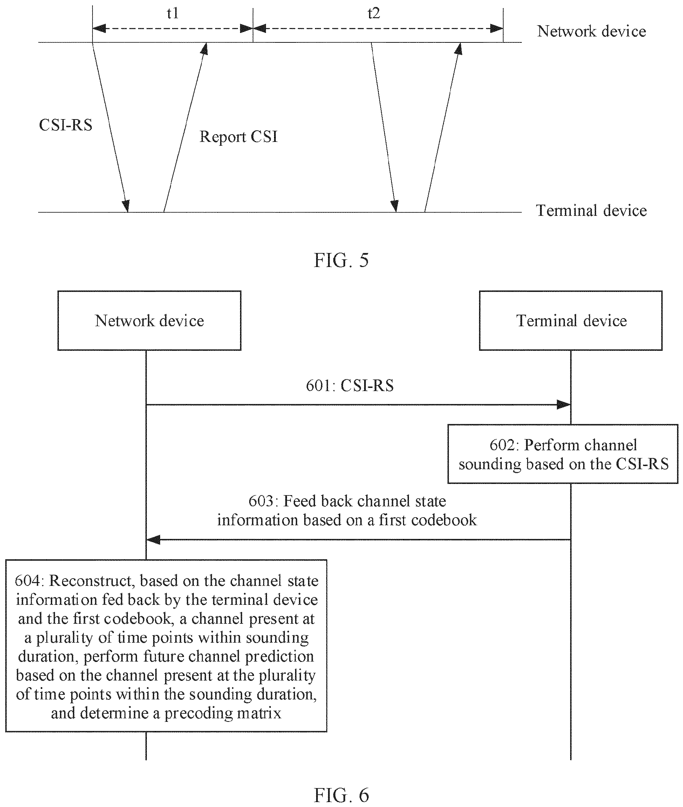

Currently, in a CSI measurement procedure, a network device calculates a precoding matrix (precoder) based on CSI reported by a terminal device, and the precoding matrix remains unchanged until a next CSI report. In other words, the network device calculates a precoding matrix by using latest reported CSI, and keeps the precoding matrix unchanged until a next CSI update, for example, as shown in FIG. 5.

It can be learned from a CSI measurement and feedback procedure in FIG. 5 that, in each CSI measurement and report period, a network device assumes that a channel condition remains unchanged within a CSI report period, and uses latest reported CSI as a basis for subsequent data transmission and precoding design. However, existence of a CSI validation delay t1 and a channel time variation t2 causes a CSI expiration problem. The CSI validation delay t1 is duration from when a network device sends a downlink CSI-RS to when the network device receives an uplink CSI feedback of a terminal device and then to when the network device obtains a precoding matrix through calculation based on CSI fed back by the terminal device. Existence of t1 causes a delay between reported CSI and CSI of an actual channel. When a channel is time-varying, t1 causes CSI expiration, which results in performance degradation. The channel time variation t2 is duration in which a network device continuously uses latest reported CSI to calculate a precoding matrix during a CSI feedback period. In other words, the precoding matrix is fixed within the duration of t2, that is, the network device assumes that a channel remains unchanged during the CSI feedback period. When a channel is time-varying, for example, in a mobile scenario, the channel also changes within the duration of t2. As a result, a precoding matrix calculated based on latest reported CSI does not match CSI of an actual channel. This causes performance degradation.

To sum up, a problem that CSI expiration in a channel time-varying scenario causes system performance degradation because precoding that is used for data sending and that is obtained through calculation by a network device based on CSI fed back by a terminal device does not match precoding corresponding to a current actual channel is an urgent problem to be resolved currently. Based on this, embodiments of this application provide a channel state information feedback method to resolve the foregoing problem. Specifically, in this application, a terminal device feeds back channel state information based on a first codebook that includes Doppler information (that is, time-domain information), where the channel state information describes a time-varying characteristic of a channel. Changing of the Doppler information is slow within short sounding duration. Therefore, a network device can reconstruct, based on the first codebook, channel information present within sounding duration, predict a future channel change trend based on a time-varying trend of a reconstructed channel, and calculate a downlink precoding matrix based on a predicted channel to better match a current channel, thereby improving system performance. In addition, in this application, transmit-end space-domain and frequency-domain combined and receive-end space-domain and time-domain combined bases are constructed, so that channel projection sparsity can be increased, thereby reducing feedback overheads. The channel state information is fed back in four dimensions, namely, a transmit end, a frequency domain, a receive end, and a time domain, or in three dimensions, namely, a transmit end, a frequency domain, and a time domain, so that a channel characteristic can be represented more precisely. Therefore, the network device can perform channel prediction more accurately based on the channel state information fed back by the terminal device.

It should be noted that, in embodiments of this application, channel state information may be fed back by a terminal device, or a processor, a chip or chip system, a functional module, or the like in a terminal device; and a CSI-RS may be delivered by a network device, or a processor, a chip or chip system, a functional module, or the like in a network device. In the following embodiments, only a terminal device and a network device are used as examples to describe in detail the channel state information feedback method provided in this application, but this application is not limited thereto.

Based on the foregoing descriptions, a channel state information feedback method provided in an embodiment of this application is applicable to the communications system shown in FIG. 1. Refer to FIG. 6. A specific procedure of the method may include the following steps:

Step 601: A network device sends a CSI-RS to a terminal device, and correspondingly, the terminal device receives the CSI-RS from the network device.
Step 602: The terminal device performs channel sounding based on the CSI-RS.
Step 603: The terminal device feeds back channel state information to the network device based on a first codebook.

It should be noted that the first codebook is known by the terminal device and the network device in advance.
Specifically, the network device sends CSI-RSs to the terminal device for a plurality of times within sounding duration. The terminal device performs a plurality of times of channel sounding based on the CSI-RSs sent by the network device for the plurality of times, to obtain channel information corresponding to a plurality of time points within the sounding duration. Then, the terminal device feeds back the channel state information to the network device based on the first codebook and the channel information corresponding to the plurality of time points within the sounding duration. The channel state information represents the channel information of a channel at the plurality of time points within the sounding duration.
In the step, the first codebook includes Doppler information, and the channel state information fed back based on the first codebook may represent the channel information of the channel at the plurality of time points within the sounding duration, and reflects the channel at the plurality of time points. In other words, that the channel state information of the channel at the plurality of time points may be fed back based on the first codebook indicates that the first codebook includes the Doppler information (time-domain information).
The first codebook may have but is not limited to the following two cases:

Case a1: The first codebook is determined based on one or more transmit-end space-domain and frequency-domain column vectors and one or more receive-end space-domain and time-domain column vectors that represent the channel. The one or more transmit-end space-domain and frequency-domain column vectors indicate channel information in a combination of transmit-end space domain and frequency domain, and the one or more receive-end space-domain and time-domain colunm vectors indicate channel information in a combination of receive-end space domain and time domain. The one or more receive-end space-domain and time-domain column vectors may reflect that the first codebook includes the Doppler information (that is, the time-domain information).
Case a2: The first codebook is determined based on one or more transmit-end space-domain and frequency-domain column vectors and one or more time-domain column vectors that represent the channel. The one or more transmit-end space-domain and frequency-domain column vectors indicate channel information in a combination of transmit-end space domain and frequency domain. The one or more time-domain column vectors may reflect that the first codebook includes the Doppler information (that is, the time-domain information).

For example, when the terminal device feeds back the channel state information based on the first codebook in the case a1, the channel information of the channel at the plurality of time points within the sounding duration is represented based on the channel information in the combination of transmit-end space domain and frequency domain indicated by the one or more transmit-end space-domain and frequency-domain column vectors in the first codebook and the channel information in the combination of receive-end space domain and time domain indicated by the one or more receive-end space-domain and time-domain column vectors in the first codebook.
For example, when the terminal device feeds back the channel state information based on the first codebook in the case a2, the channel information of the channel at the plurality of time points within the sounding duration is represented based on the channel information in the combination of transmit-end space domain and frequency domain indicated by the one or more transmit-end space-domain and frequency-domain column vectors in the first codebook and the channel information in the combination of transmit-end space domain and frequency domain indicated by the one or more transmit-end space-domain and frequency-domain column vectors in the first codebook.
In an optional implementation, the first codebook W in the case a1 may meet the following formula 1, that is, a structure of the first codebook may be represented by the formula 1:

$$W = W_1 W_2 W_3^H \qquad \text{Formula 1}$$

Herein, $W_1$ is a transmit-end space-domain and frequency-domain combined base matrix, the transmit-end space-domain and frequency-domain combined base matrix includes the one or more transmit-end space-domain and frequency-domain column vectors, $W_3$ is a receive-end space-domain and time-domain combined base matrix, the receive-end space-domain and time-domain combined base matrix includes the one or more receive-end space-domain and time-domain column vectors, $W_2$ is a complex coefficient matrix corresponding to the transmit-end space-domain and frequency-domain combined base matrix and the receive-end space-domain and time-domain combined base matrix, and $W_3^H$ is a transposed matrix of $W_3$.

For example, the transmit-end space-domain and frequency-domain combined base matrix $W_1$ may meet the following formula 2:

$$W_1 = W_{11} W_{12} \qquad \text{Formula 2}$$

Herein, $W_{11}$ is a transmit-end space-domain and frequency-domain combined basic base matrix, each column vector in $W_{11}$ corresponds to one transmit-end space-domain and frequency-domain combined basic base, $W_{12}$ is a transmit-end space-domain and frequency-domain combined basic base correction matrix, and a column vector length of $W_{11}$ is related to a quantity of antennas of the network device and a quantity of frequency-domain resource units occupied by the CSI-RS.

It should be noted that, in this application, a basic base matrix is a matrix known by both the terminal device and the network device.

Optionally, the transmit-end space-domain and frequency-domain combined basic base matrix $W_{11}$ may be a discrete Fourier transform (discrete fourier transform, DFT) base matrix. Optionally, two polarization directions of the channel may correspond to a same transmit-end space-domain and frequency-domain combined base. In this case, a dimension of the transmit-end space-domain and frequency-domain combined basic base matrix $W_{11}$ may be $((M_1 \times M_2) \times N_{sb}) \times S_1$, where $M_1$ is a quantity of antenna ports in a horizontal direction of transmission by the network device, $M_2$ is a quantity of antenna ports in a vertical direction of transmission by the network device, $N_{sb}$ is a quantity of frequency units, and $S_1$ is a selected quantity of transmit-end space-domain and frequency-domain combined basic bases. Optionally, two polarization directions of the channel may correspond to different transmit-end space-domain and frequency-domain combined bases. In this case, a dimension of the transmit-end space-domain and frequency-domain combined basic base matrix may be $(2 \times (M_1 \times M_2) \times N_{sb}) \times S_1$.

Optionally, the transmit-end space-domain and frequency-domain combined basic base correction matrix $W_{12}$ may also be referred to as a coefficient feedback matrix or projection coefficient matrix of a transmit-end space-domain and frequency-domain combined base to a DFT base, and is used to make $W_{11}$ approximate to $W_1$. A dimension of $W_{12}$ may be $S_1 \times L$, where L is a quantity of paths or a selected quantity of transmit-end space-domain and frequency-domain combined bases. L may be a value preconfigured or predefined by the network device.

For example, the network device may preconfigure L by using one or more of RRC signaling, MAC CE signaling, and downlink control information (downlink control information, DCI) signaling.

Specifically, one frequency-domain basic base in the transmit-end space-domain and frequency-domain combined basic base matrix $W_{11}$ may correspond to a plurality of transmit-end space-domain basic bases, or one transmit-end space-domain basic base in the transmit-end space-domain and frequency-domain combined base matrix $W_1$ may correspond to a plurality of frequency-domain basic bases.

In an example implementation, $W_{11}$ may meet the following formula 3:

$$W_{11} = W_f^* \otimes W_{tx} \qquad \text{Formula 3}$$

Herein, $W_f^*$ is a conjugate matrix of $W_f$, $W_f$ indicates a frequency-domain basic base, $W_{tx}$ indicates a transmit-end space-domain basic base, and $\otimes$ is a Kronecker product.

Optionally, the frequency-domain basic base $W_f$ and the transmit-end space-domain basic base $W_{tx}$ may be DFT matrices.

Optionally, a feedback period of the channel state information may be classified into a long period and a short period. The long period may be, for example, 100 ms. The short period may be, for example, 20 ms. During channel state information feedback, different feedback periods may be used to feed back different information.

For example, a feedback period T1 of the transmit-end space-domain and frequency-domain combined basic base correction matrix $W_{12}$ may be the long period, and such information is reported to the network device based on the long period, to reduce overheads as much as possible. T1 may be a value preconfigured or predefined by the network device. A feedback period of first information that is in the channel state information and that is other than information fed back based on $W_{12}$ is the short period, and T1 is greater than the period of feeding back the first information. In other words, a feedback period of channel state information that is fed back based on the first codebook and that is other than fed-back $W_{12}$ is the short period. For example, feedback periods of $W_2$ and $W_{32}$ (the first information) may be the short period.

T1 is the long period, and may be, for example, 100 ms. The period of the other channel state information (the first information) fed back based on the first codebook is the short period, and may be, for example, 20 ms.

For example, the network device may preconfigure T1 by using one or more of RRC signaling, MAC CE signaling, and DCI signaling.

In a possible implementation, the receive-end space-domain and time-domain combined base matrix $W_3$ may meet the following formula 4:

$$W_3 = W_{31} W_{32} \qquad \text{Formula 4}$$

Herein, $W_{31}$ is a receive-end space-domain and time-domain combined basic base matrix, each column vector in $W_{31}$ corresponds to one receive-end space-domain and time-domain combined basic base, $W_{32}$ is a receive-end space-domain and time-domain combined basic base correction matrix, and a column vector length of $W_{31}$ is related to a quantity of antennas of the terminal device and the sounding duration.

Optionally, the receive-end space-domain and time-domain combined basic base matrix $W_{31}$ may be a DFT matrix. A dimension of $W_{31}$ may be $(M_3 \times N_d) \times S_2$, where $M_3$ is the quantity of antennas of the terminal device, $N_d$ is the sounding duration, and $S_2$ is a selected quantity of receive-end space-domain and time-domain combined basic bases.

Optionally, the receive-end space-domain and time-domain combined basic base correction matrix $W_{32}$ may also be referred to as a coefficient feedback matrix or projection coefficient matrix of a receive-end space-domain and time-domain combined base to a DFT base, and is used to make $W_{31}$ approximate to $W_3$. A dimension of $W_{32}$ may be $S_2 \times N_1$, where $N_1$ represents a selected quantity of receive-end space-domain and time-domain combined bases.

$N_1$ may be a value preconfigured or predefined by the network device.

For example, the network device may preconfigure $N_1$ by using one or more of RRC signaling, MAC CE signaling, and DCI signaling.

Specifically, one time-domain basic base in the receive-end space-domain and time-domain combined basic base matrix $W_{31}$ may correspond to a plurality of receive-end space-domain basic bases, or one receive-end space-domain basic base in the receive-end space-domain and time-domain combined base matrix $W_3$ may correspond to a plurality of time-domain basic bases.

In an example implementation, $W_{31}$ may meet the following formula 5:

$$W_{31} = W_t^* \otimes W_{rx} \qquad \text{Formula 5}$$

Herein, $W_t^*$ is a conjugate matrix of $W_t$, $W_t$ indicates a time-domain basic base, $W_{rx}$ indicates a receive-end space-domain basic base, and $\otimes$ is a Kronecker product.

Optionally, the time-domain basic base $W_t$ and the receive-end space-domain basic base $W_{rx}$ may be DFT matrices.

In a specific manner, a dimension of $W_2$ may be $L * N_1$. For explanations of L and $N_1$, refer to the foregoing related descriptions of L and $N_1$. Details are not described herein again.

In another optional implementation, the first codebook W in the case a2 may meet the following formula 6, that is, a structure of the first codebook may be represented by the formula 6:

$$W = W_1 W_4 W_5^H \qquad \text{Formula 6}$$

Herein, $W_1$ is a transmit-end space-domain and frequency-domain combined base matrix, the transmit-end space-domain and frequency-domain combined base matrix includes the one or more transmit-end space-domain and frequency-domain column vectors, $W_5$ is a time-domain base matrix, the time-domain base matrix includes the one or more time-domain column vectors, $W_4$ is a complex coefficient matrix corresponding to the transmit-end space-domain and frequency-domain combined base matrix and the time-domain base matrix, and $W_5^H$ is a transposed matrix of $W_5$.

Herein, $W_1$ is the same as $W_1$ used in the formula 1. For specific related explanations of $W_1$, refer to the foregoing related descriptions. Details are not described herein again.

Optionally, the time-domain base matrix $W_5$ may be a DFT matrix, and a dimension of $W_5$ may be $N_d \times N_d$.

For example, a dimension of $W_4$ may be $L \times N_d$, where L is a quantity of paths or a selected quantity of transmit-end space-domain and frequency-domain combined bases, and $N_d$ represents the sounding duration.

In an optional implementation, before channel sounding, the network device may first notify the terminal device of a CSI obtaining solution. For example, the terminal device receives second information from the network device, where the second information indicates a codebook type used by the terminal device for channel sounding. For example, an implementation may be that the second information is a higher layer parameter codebook type (codebookType) of RRC. Specifically, the codebook type corresponding to this embodiment may be set to a non-precoding type 'typeIIr18-mobility-NonePrecoding' in an R18 mobile scenario.

For example, when the terminal device feeds back the CSI based on the first codebook described in the case a1, the terminal device may feed back one or more bases based on $W_1$ and $W_3$, and feed back, based on $W_2$, one or more coefficients corresponding to the transmit-end space-domain and frequency-domain combined base matrix and the receive-end space-domain and time-domain combined base matrix. In other words, the CSI fed back by the terminal device based on the first codebook described in the case a1 may include the one or more bases fed back based on $W_1$ and $W_3$, and the one or more coefficients that are fed back based on $W_2$ and that correspond to the transmit-end space-domain and frequency-domain combined base matrix and the receive-end space-domain and time-domain combined base matrix. It should be noted that the foregoing information included in the CSI is merely an example, and the CSI may further include other information. This is not limited in this application.

For example, when the terminal device feeds back the CSI based on the first codebook described in the case a2, the terminal device may feed back one or more bases based on $W_1$ and $W_5$, and feed back, based on $W_4$, one or more coefficients corresponding to the transmit-end space-domain and frequency-domain combined base matrix and the time-domain base matrix. In other words, the CSI fed back by the terminal device based on the first codebook described in the case a1 may include the one or more bases fed back based on $W_1$ and $W_5$, and the one or more coefficients that are fed back based on $W_4$ and that correspond to the transmit-end space-domain and frequency-domain combined base matrix and the time-domain base matrix. It should be noted that the foregoing information included in the CSI is merely an example, and the CSI may further include other information. This is not limited in this application.

Step 604: The network device reconstructs, based on the channel state information fed back by the terminal device and the first codebook, the channel present at the plurality of time points within the sounding duration, performs future channel prediction based on the channel present at the plurality of time points within the sounding duration, and determines a precoding matrix.

For example, in the case of the first codebook described in the case a1, when the network device reconstructs, based on the channel state information fed back by the terminal device and the first codebook, the channel present at the plurality of time points within the sounding duration, the network device may reconstruct $W_1$, $W_2$, and $W_3$ based on the one or more bases fed back by the terminal device based on $W_1$ and $W_3$ and the one or more coefficients that are fed back by the terminal device based on $W_2$ and that correspond to the transmit-end space-domain and frequency-domain combined base matrix and the receive-end space-domain and time-domain combined base matrix, and perform a matrix operation based on $W_1$, $W_2$, and $W_3$, to reconstruct the channel present at the plurality of time points within the sounding duration.

For example, in the case of the first codebook described in the case a2, when the network device reconstructs, based on the channel state information fed back by the terminal device and the first codebook, the channel present at the plurality of time points within the sounding duration, the network device may reconstruct $W_1$, $W_4$, and $W_5$ based on the one or more bases fed back by the terminal device based on $W_1$ and $W_5$ and the one or more coefficients that are fed back by the terminal device based on $W_4$ and that correspond to the transmit-end space-domain and frequency-domain combined base matrix and the time-domain base matrix, and perform a matrix operation based on $W_1$, $W_4$, and $W_5$, to reconstruct the channel present at the plurality of time points within the sounding duration.

According to the foregoing method, the first codebook includes the Doppler information. CSI expiration is essentially caused by a time-varying characteristic of a channel, and corresponds to Doppler (Doppler) variation. In a conventional technology, a network device keeps CSI unchanged within duration from last CSI reception to next CSI reception; however, a channel is time-varying within this duration, and therefore, the CSI is inconsistent with CSI of the time-varying channel. In this application, the terminal device describes a time-varying characteristic of the channel by using the channel state information fed back based on the first codebook that includes the Doppler information. Changing of the Doppler information is slow within short sounding duration. Therefore, the network device can predict a future channel change trend by reconstructing, based on the first codebook, the channel present within the sounding duration. In this way, the network device can predict a channel present within duration from last CSI reception to next CSI reception, and perform precoding. Compared with the conventional technology in which CSI remains unchanged, in this application, a channel change trend is predicted, and a downlink precoding matrix is calculated based on a predicted channel to better match a current channel, thereby improving system performance.

Further, transmit-end space-domain and frequency-domain combined and receive-end space-domain and time-domain combined bases are constructed, so that feedback coefficients obtained through projection of the channel on the base can be sparser. In this way, fewer feedback coefficients are selected, thereby reducing feedback overheads. The channel state information is fed back in four dimensions, namely, a transmit end, a frequency domain, a receive end, and a time domain, or in three dimensions, namely, a transmit end, a frequency domain, and a time domain, so that a channel characteristic can be represented more precisely. Therefore, the network device can perform channel prediction more accurately based on the channel state information fed back by the terminal device.

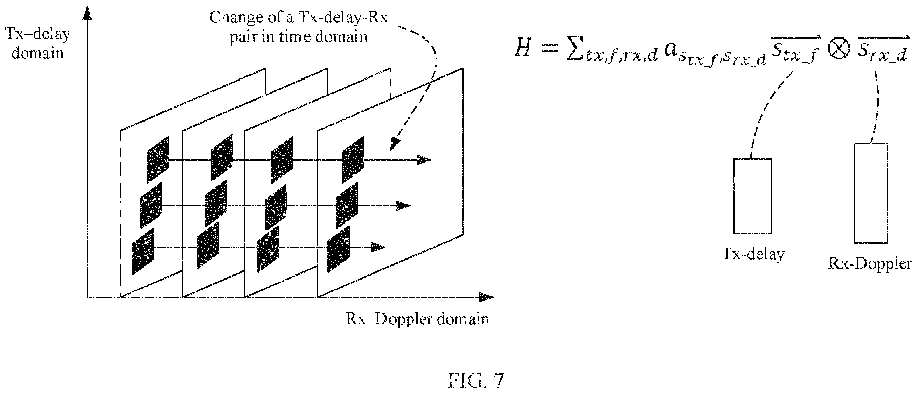

In a specific example, as shown in FIG. 7, the channel information within the sounding duration is projected to a transmit-end Tx and delay-domain (that is, frequency-domain) combined base and a receive-end Rx and Doppler-domain (that is, time-domain) combined base that are shown in the codebook, and a small quantity of feedback coefficients are selected. The terminal device reports the transmit-end Tx and delay-domain (that is, frequency-domain) combined base, the receive-end Rx and Doppler-domain (that is, time-domain) combined base, and channel projection coefficients in four dimensions, namely, the transmit end, the frequency domain, the receive end, and the time domain, based on the first codebook. The network device reconstructs, based on the fed-back channel information, the channel present within the sounding duration. The channel at the time points may be represented by a plurality of Tx-delay-Rx pairs, and a subsequent channel is predicted based on a time-domain change of the Tx-delay-Rx pairs corresponding to the plurality of time points.

For example, for the codebook shown in FIG. 7, the channel H predicted by the network device may meet the following formula 7:

$$H = \sum_{tx,f,rx,d} a_{s_{tx\_f},s_{rx\_d}} \overrightarrow{s_{tx\_f}} \otimes \overrightarrow{s_{rx\_d}} \qquad \text{Formula 7}$$

Herein, $\sum_{tx,f,rx,d} a_{stx\_f,srx\_d}$ represents a complex coefficient, $\overrightarrow{s_{tx\_f}}$ represents a transmit-end space-domain and frequency-domain combined base, $\overrightarrow{s_{rx\_d}}$ represents a receive-end space-domain and time-domain combined base, tx represents the transmit-end space domain, f represents the frequency domain, rx represents the receive-end space domain, and d represents the time domain.

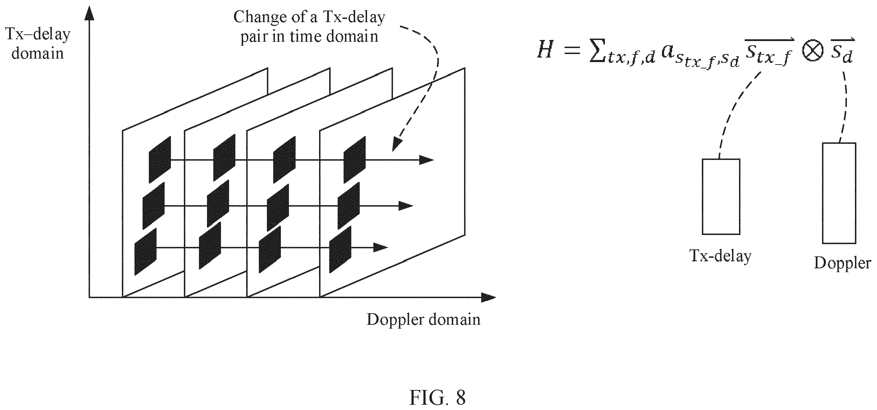

In another specific example, as shown in FIG. 8, the channel information within the sounding duration is projected to a transmit-end Tx and delay-domain (that is, frequency-domain) combined base and a Doppler-domain (that is, time-domain) base that are shown in the codebook, and a small quantity of feedback coefficients are selected. The terminal device reports the transmit-end Tx and delay-domain (that is, frequency-domain) combined base, the Doppler-domain (that is, time-domain) base, and channel projection coefficients in three dimensions, namely, the transmit end, the frequency domain, and the time domain, based on the first codebook. The network device reconstructs, based on the fed-back channel information, the channel present within the sounding duration. The channel at the time points may be represented by a plurality of Tx-delay pairs, and a subsequent channel is predicted based on a time-domain change of the Tx-delay pairs corresponding to the plurality of time points.

For example, for the codebook shown in FIG. 8, the channel H predicted by the network device may meet the following formula 8:

$$H = \sum_{tx,f,d} a_{s_{tx\_f},s_d} \overrightarrow{s_{tx\_f}} \otimes \overrightarrow{s_d} \qquad \text{Formula 8}$$

Herein, $\sum_{tx,f,d} a_{stx\_f,sd}$ represents a complex coefficient, $\overrightarrow{s_{tx\_f}}$ represents a transmit-end space-domain and frequency-domain combined base, $\overrightarrow{s_d}$ represents a time-domain base, tx represents the transmit-end space domain, f represents the frequency domain, and d represents the time domain.

Currently, during CSI feedback, a terminal device may feed back a base to a network device by using CSI. To increase CSI feedback coefficient sparsity, the terminal device performs channel projection usually by using a statistical covariance base. In addition, to reduce feedback overheads, the statistical covariance base needs to be projected to a DFT base, and compressed and quantized to be fed back to the network device. In this case, the statistical covariance base represented by the DFT base is no longer orthogonal, and the terminal device needs to perform an orthogonalization operation on the base. However, the network device can obtain only a corresponding non-orthogonal base based on the CSI fed back by the terminal device and an existing codebook, and the non-orthogonal base is inconsistent with a base obtained through orthogonalization by the terminal device. In other words, the current codebook cannot implement alignment between the CSI base of the terminal device and the CSI base obtained by the network device based on the CSI fed back by the terminal device. As a result, the network device cannot accurately reconstruct a channel based on CSI feedback information. This affects accuracy of a precoding matrix.

Based on this, an embodiment of this application provides another channel state information feedback method, to implement alignment between a CSI base obtained by a terminal device and a CSI base obtained by a network device.

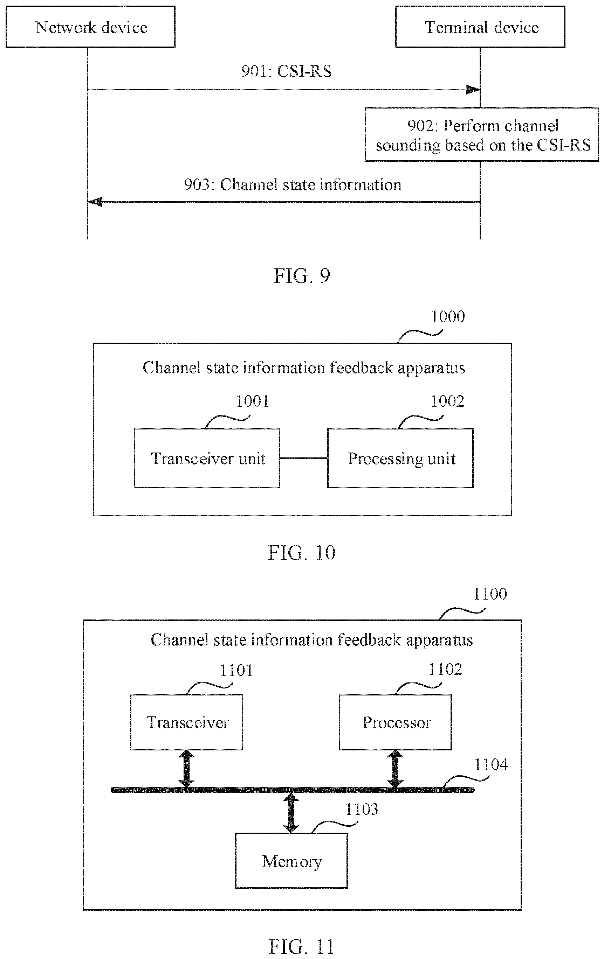

The another channel state information feedback method provided in this embodiment of this application is applicable to the communications system shown in FIG. 1. Refer to FIG. 9. A specific procedure of the method may include the following steps:

Step 901: A network device sends a CSI-RS to a terminal device, and correspondingly, the terminal device receives the CSI-RS from the network device.

Step 902: The terminal device performs channel sounding based on the CSI-RS.

Step 903: The terminal device feeds back channel state information to the network device, where the channel state information indicates one or more first bases, and the one or more first bases are used to generate, based on a preset base generation method, one or more second bases indicating the channel state information.

It should be noted that, in this application, a base is a vector used to represent a channel characteristic.

In an optional implementation, the one or more first bases are one or more space-domain and frequency-domain combined statistical covariance base column vectors obtained through quantization.

For example, the preset base generation method may be an orthogonalization method, such as a QR decomposition (QR decomposition) method (also referred to as a Schmidt orthogonalization method), preconfigured or predefined by the network device.

Specifically, each of the terminal device and the network device generates, from the one or more first bases based on the preset base generation method, the one or more second bases indicating the channel state information, so that the base of the terminal device is aligned with the base of the network device.

According to the method, the base of the terminal device is aligned with the base of the network device, so that channel reconstruction and precoding can be performed more accurately, thereby improving system performance.

Based on the foregoing embodiments, an embodiment of this application further provides a channel state information feedback apparatus. Refer to FIG. 10. The channel state information feedback apparatus 1000 may include a transceiver unit 1001 and a processing unit 1002. The transceiver unit 1001 is configured to receive a signal (information, a message, or data) or send a signal (information, a message, or data) for the channel state information feedback apparatus 1000. The processing unit 1002 is configured to control and manage an action of the channel state information feedback apparatus 1000. The processing unit 1002 may further control a step performed by the transceiver unit 1001.

For example, the channel state information feedback apparatus 1000 may be specifically the terminal device in the foregoing embodiments, or a processor, a chip, a chip system, a functional module, or the like in the terminal device; or the channel state information feedback apparatus 1000 may be specifically the network device in the foregoing embodiments, or a processor, a chip, a chip system, a functional module, or the like in the network device.

In an embodiment, when the channel state information feedback apparatus 1000 is configured to implement a function of the terminal device in the embodiment described in FIG. 6, the following may be specifically included:

The transceiver unit 1001 is configured to receive a CSI-RS from a network device. The processing unit 1002 is configured to perform channel sounding based on the CSI-RS. The transceiver unit 1001 is further configured to feed back channel state information to the network device based on a first codebook, where the first codebook is determined based on one or more transmit-end space-domain and frequency-domain column vectors and one or more receive-end space-domain and time-domain column vectors that represent a channel, or the first codebook is determined based on the one or more transmit-end space-domain and frequency-domain column vectors and one or more time-domain column vectors that represent the channel, the one or more transmit-end space-domain and frequency-domain colunm vectors indicate channel information in a combination of a transmit-end space domain and frequency domain, and the one or more receive-end space-domain and time-domain column vectors indicate channel information in a combination of a receive-end space domain and time domain.

In an optional implementation, the first codebook may meet the following formula:

$$W = W_1 W_2 W_3^H$$

Herein, W is the first codebook, $W_1$ is a transmit-end space-domain and frequency-domain combined base matrix, the transmit-end space-domain and frequency-domain combined base matrix includes the one or more transmit-end space-domain and frequency-domain column vectors, $W_3$ is a receive-end space-domain and time-domain combined base matrix, the receive-end space-domain and time-domain combined base matrix includes the one or more receive-end space-domain and time-domain column vectors, and $W_2$ is a complex coefficient matrix corresponding to the transmit-end space-domain and frequency-domain combined base matrix and the receive-end space-domain and time-domain combined base matrix.

In another optional implementation, the first codebook may meet the following formula:

$$W = W_1 W_4 W_5^H$$

Herein, W is the first codebook, $W_1$ is a transmit-end space-domain and frequency-domain combined base matrix, the transmit-end space-domain and frequency-domain combined base matrix includes the one or more transmit-end space-domain and frequency-domain column vectors, $W_5$ is a time-domain base matrix, the time-domain base matrix includes the one or more time-domain column vectors, and $W_4$ is a complex coefficient matrix corresponding to the transmit-end space-domain and frequency-domain combined base matrix and the time-domain base matrix.

For example, the transmit-end space-domain and frequency-domain combined base matrix $W_1$ may meet the following formula:

$$W_1 = W_{11} W_{12}$$

Herein, $W_{11}$ is a transmit-end space-domain and frequency-domain combined basic base matrix, each column vector in $W_{11}$ corresponds to one transmit-end space-domain and frequency-domain combined basic base, $W_{12}$ is a transmit-end space-domain and frequency-domain combined basic base correction matrix, and a column vector length of $W_{11}$ is related to a quantity of antennas of the network device and a quantity of frequency-domain resource units occupied by the CSI-RS.

For example, the receive-end space-domain and time-domain combined base matrix $W_3$ meets the following formula:

$$W_3 = W_{31} W_{32}$$

Herein, $W_{31}$ is a receive-end space-domain and time-domain combined basic base matrix, each column vector in $W_{31}$ corresponds to one receive-end space-domain and time-domain combined basic base, $W_{32}$ is a receive-end space-domain and time-domain combined basic base correction matrix, and a column vector length of $W_{31}$ is related to a quantity of antennas of the terminal device and sounding duration.

Optionally, one frequency-domain basic base in the transmit-end space-domain and frequency-domain combined basic base matrix corresponds to a plurality of transmit-end space-domain basic bases, or one transmit-end space-domain basic base in the transmit-end space-domain and frequency-domain combined base matrix corresponds to a plurality of frequency-domain basic bases.

Specifically, $W_{11}$ may meet the following formula:

$$W_{11} = W_f^* \otimes W_{tx}$$

Herein, $W_f^*$ is a conjugate matrix of $W_f$, $W_f$ indicates a frequency-domain basic base, and $W_{tx}$ indicates a transmit-end space-domain basic base.

Optionally, the frequency-domain basic base $W_f$ and the transmit-end space-domain basic base $W_{tx}$ may be DFT matrices.

Optionally, one time-domain basic base in the receive-end space-domain and time-domain combined basic base matrix corresponds to a plurality of receive-end space-domain basic bases, or one receive-end space-domain basic base in the receive-end space-domain and time-domain combined base matrix corresponds to a plurality of time-domain basic bases.

Specifically, $W_{31}$ may meet the following formula:

$$W_{31} = W_t^* \otimes W_{rx}$$

Herein, $W_t^*$ is a conjugate matrix of $W_t$, $W_t$ indicates a time-domain basic base, and $W_{rx}$ indicates a receive-end space-domain basic base.

Optionally, the time-domain basic base $W_t$ and the receive-end space-domain basic base $W_{rx}$ may be DFT matrices.

In an example manner, a dimension of $W_2$ is $L * N_1$, L represents a selected quantity of transmit-end space-domain and frequency-domain combined bases, L is a value preconfigured or predefined by the network device, $N_1$ represents a selected quantity of receive-end space-domain and time-domain combined bases, and $N_1$ is a value pre-configured or predefined by the network device.

In an example manner, a dimension of $W_4$ is $L * N_d$, L represents a selected quantity of transmit-end space-domain and frequency-domain combined bases, L is a value preconfigured or predefined by the network device, and $N_d$ represents sounding duration.

Optionally, a feedback period of the transmit-end space-domain and frequency-domain combined basic base correction matrix $W_{12}$ is T1, T1 is a value preconfigured or predefined by the network device, T1 is greater than a period of feeding back first information, and the first information is information other than information fed back based on $W_{12}$.

In an optional implementation, the transceiver unit 1001 may be further configured to receive second information from the network device, where the second information indicates a codebook type used by the terminal device for channel sounding.

In an embodiment, when the channel state information feedback apparatus 1000 is configured to implement a function of the network device in the embodiment described in FIG. 6, the following may be specifically included:
The transceiver unit 1001 is configured to send a CSI-RS to a terminal device, and receive channel state information that is fed back by the terminal device based on a first codebook, where the first codebook is determined based on one or more transmit-end space-domain and frequency-domain column vectors and one or more receive-end space-domain and time-domain column vectors that represent a channel, or the first codebook is determined based on the one or more transmit-end space-domain and frequency-domain column vectors and one or more time-domain column vectors that represent the channel, the one or more transmit-end space-domain and frequency-domain column vectors indicate channel information in a combination of a transmit-end space domain and frequency domain, and the one or more receive-end space-domain and time-domain column vectors indicate channel information in a combination of a receive-end space domain and time domain. The processing unit 1002 is configured to control sending and receiving operations of the transceiver unit 1001.

In an optional implementation, the first codebook may meet the following formula:

$$W = W_1 W_2 W_3^H$$

Herein, W is the first codebook, $W_1$ is a transmit-end space-domain and frequency-domain combined base matrix, the transmit-end space-domain and frequency-domain combined base matrix includes the one or more transmit-end space-domain and frequency-domain column vectors, $W_3$ is a receive-end space-domain and time-domain combined base matrix, the receive-end space-domain and time-domain combined base matrix includes the one or more receive-end space-domain and time-domain column vectors, and $W_2$ is a complex coefficient matrix corresponding to the transmit-end space-domain and frequency-domain combined base matrix and the receive-end space-domain and time-domain combined base matrix.

In another optional implementation, the first codebook may meet the following formula:

$$W = W_1 W_4 W_5^H$$

Herein, W is the first codebook, $W_1$ is a transmit-end space-domain and frequency-domain combined base matrix, the transmit-end space-domain and frequency-domain combined base matrix includes the one or more transmit-end space-domain and frequency-domain column vectors, $W_5$ is a time-domain base matrix, the time-domain base matrix includes the one or more time-domain column vectors, and $W_4$ is a complex coefficient matrix corresponding to the transmit-end space-domain and frequency-domain combined base matrix and the time-domain base matrix.

For example, the transmit-end space-domain and frequency-domain combined base matrix $W_1$ meets the following formula:

$$W_1 = W_{11}W_{12}$$

Herein, $W_{11}$ is a transmit-end space-domain and frequency-domain combined basic base matrix, each column vector in $W_{11}$ corresponds to one transmit-end space-domain and frequency-domain combined basic base, $W_{12}$ is a transmit-end space-domain and frequency-domain combined basic base correction matrix, and a column vector length of $W_{11}$ is related to a quantity of antennas of the network device and a quantity of frequency-domain resource units occupied by the CSI-RS.

For example, the receive-end space-domain and time-domain combined base matrix $W_3$ meets the following formula:

$$W_3 = W_{31}W_{32}$$

Herein, $W_{31}$ is a receive-end space-domain and time-domain combined basic base matrix, each column vector in $W_{31}$ corresponds to one receive-end space-domain and time-domain combined basic base, $W_{32}$ is a receive-end space-domain and time-domain combined basic base correction matrix, and a column vector length of $W_{31}$ is related to a quantity of antennas of the terminal device and sounding duration.

Optionally, one frequency-domain basic base in the transmit-end space-domain and frequency-domain combined basic base matrix corresponds to a plurality of transmit-end space-domain basic bases, or one transmit-end space-domain basic base in the transmit-end space-domain and frequency-domain combined base matrix corresponds to a plurality of frequency-domain basic bases.

Specifically, $W_{11}$ meets the following formula:

$$W_{11} = W_f^* \otimes W_{tx}$$

Herein, $W_f^*$ is a conjugate matrix of $W_f$, $W_f$ indicates a frequency-domain basic base, and $W_{tx}$ indicates a transmit-end space-domain basic base.

Optionally, the frequency-domain basic base $W_f$ and the transmit-end space-domain basic base $W_{tx}$ may be DFT matrices.

Optionally, one time-domain basic base in the receive-end space-domain and time-domain combined basic base matrix corresponds to a plurality of receive-end space-domain basic bases, or one receive-end space-domain basic base in the receive-end space-domain and time-domain combined base matrix corresponds to a plurality of time-domain basic bases.

Specifically, $W_{31}$ meets the following formula:

$$W_{31} = W_t^* \otimes W_{rx}$$

Herein, $W_t^*$ is a conjugate matrix of $W_t$, $W_t$ indicates a time-domain basic base, and $W_{rx}$ indicates a receive-end space-domain basic base.

Optionally, the frequency-domain basic base $W_f$ and the transmit-end space-domain basic base $W_{tx}$ may be DFT matrices.

In an example, a dimension of $W_2$ is $L * N_1$, L represents a selected quantity of transmit-end space-domain and frequency-domain combined bases, L is a value preconfigured or predefined by the network device, $N_1$ represents a selected quantity of receive-end space-domain and time-domain combined bases, and $N_1$ is a value preconfigured or predefined by the network device.

In an example, a dimension of $W_4$, is $L * N_d$, L represents a selected quantity of transmit-end space-domain and frequency-domain combined bases, L is a value preconfigured or predefined by the network device, and $N_d$ represents sounding duration.

Optionally, a feedback period of the transmit-end space-domain and frequency-domain combined basic base correction matrix $W_{12}$ is T1, T1 is a value preconfigured or predefined by the network device, T1 is greater than a period of feeding back first information, and the first information is information that is in the CSI and that is other than information fed back based on $W_{12}$.

For example, the transceiver unit 1001 is further configured to send second information to the terminal device, where the second information indicates a codebook type used by the terminal device for channel sounding.

In an embodiment, when the channel state information feedback apparatus 1000 is configured to implement a function of the terminal device in the embodiment described in FIG. 9, the following may be specifically included:

The transceiver unit 1001 is configured to receive a CSI-RS from a network device. The processing unit 1002 is configured to perform channel sounding based on the CSI-RS. The transceiver unit 1001 is further configured to feed back channel state information to the network device, where the channel state information indicates one or more first bases, and the one or more first bases are used to generate, based on a preset base generation method, one or more second bases indicating the channel state information.

For example, the one or more first bases may be one or more space-domain and frequency-domain combined statistical covariance base column vectors obtained through quantization.

Optionally, the preset base generation method may be an orthogonalization method preconfigured or predefined by the network device.

In an embodiment, when the channel state information feedback apparatus 1000 is configured to implement a function of the network device in the embodiment described in FIG. 9, the following may be specifically included:

The transceiver unit 1001 is configured to send a CSI-RS to a terminal device, and receive channel state information fed back by the terminal device, where the channel state information indicates one or more first bases, and the one or more first bases are used to generate, based on a preset base generation method, one or more second bases indicating the channel state information. The processing unit 1002 is configured to control operations of the transceiver unit 1001.

For example, the one or more first bases may be one or more space-domain and frequency-domain combined statistical covariance base column vectors obtained through quantization.

Optionally, the preset base generation method may be an orthogonalization method preconfigured or predefined by the network device.

It should be noted that division into the units in embodiments of this application is an example, and is merely a logical function division. There may be another division manner during actual implementation. Functional units in embodiments of this application may be integrated into one processing unit, or each unit may exist alone physically, or two or more units may be integrated into one unit. The integrated unit may be implemented in a form of hardware, or may be implemented in a form of a software function unit.

If the integrated unit is implemented in the form of a software function unit and is sold or used as an independent product, the integrated unit may be stored in a computer-readable storage medium. Based on such an understanding, the technical solutions in this application essentially, or the part contributing to a conventional technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a channel state information feedback apparatus. Refer to FIG. 11. The channel state information feedback apparatus 1100 may include a transceiver 1101 and a processor 1102. Optionally, the channel state information feedback apparatus 1100 may further include a memory 1103. The memory 1103 may be disposed inside the channel state information feedback apparatus 1100, or may be disposed outside the channel state information feedback apparatus 1100. The processor 1102 may control the transceiver 1101 to receive and send information, signals, data, or the like.

Specifically, the processor 1102 may be a central processing unit (central processing unit, CPU), a network processor (network processor, NP), or a combination of a CPU and an NP. The processor 1102 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The transceiver 1101, the processor 1102, and the memory 1103 are connected to each other. Optionally, the transceiver 1101, the processor 1102, and the memory 1103 are connected to each other by using a bus 1104. The bus 1104 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, in FIG. 11, only one bold line is used to represent the bus. However, this does not indicate that there is only one bus or one type of bus.

In an optional implementation, the memory 1103 is configured to store a program or the like. Specifically, the program may include program code, and the program code includes computer operation instructions. The memory 1103 may include a RAM, and may further include a non-volatile memory (non-volatile memory), for example, one or more magnetic disk memories. The processor 1102 executes the application program stored in the memory 1103, to implement the foregoing function, thereby implementing a function of the channel state information feedback apparatus 1100.

For example, the channel state information feedback apparatus 1100 may be the terminal device in the foregoing embodiments, or may be the network device in the foregoing embodiments.

In an embodiment, when the channel state information feedback apparatus 1100 implements a function of the terminal device in the embodiment shown in FIG. 6, the transceiver 1101 may implement receiving and sending operations performed by the terminal device in the embodiment shown in FIG. 6, and the processor 1102 may implement an operation, other than the receiving and sending operations, performed by the terminal device in the embodiment shown in FIG. 6. For specific related descriptions, refer to related descriptions in the embodiment shown in FIG. 6. Details are not described herein again.

In another embodiment, when the channel state information feedback apparatus 1100 implements a function of the network device in the embodiment shown in FIG. 6, the transceiver 1101 may implement receiving and sending operations performed by the network device in the embodiment shown in FIG. 6, and the processor 1102 may implement an operation, other than the receiving and sending operations, performed by the network device in the embodiment shown in FIG. 6. For specific related descriptions, refer to related descriptions in the embodiment shown in FIG. 6. Details are not described herein again.

In another embodiment, when the channel state information feedback apparatus 1100 implements a function of the terminal device in the embodiment shown in FIG. 9, the transceiver 1101 may implement receiving and sending operations performed by the terminal device in the embodiment shown in FIG. 9, and the processor 1102 may implement an operation, other than the receiving and sending operations, performed by the terminal device in the embodiment shown in FIG. 9. For specific related descriptions, refer to related descriptions in the embodiment shown in FIG. 9. Details are not described herein again.

In another embodiment, when the channel state information feedback apparatus 1100 implements a function of the network device in the embodiment shown in FIG. 9, the transceiver 1101 may implement receiving and sending operations performed by the network device in the embodiment shown in FIG. 9, and the processor 1102 may implement an operation, other than the receiving and sending operations, performed by the network device in the embodiment shown in FIG. 9. For specific related descriptions, refer to related descriptions in the embodiment shown in FIG. 9. Details are not described herein again.

Based on the foregoing embodiments, an embodiment of this application provides a communications system. The communications system may include the terminal device, the network device, and the like in the foregoing embodiments.

An embodiment of this application further provides a computer-readable storage medium. The computer-readable storage medium is configured to store a computer program. When the computer program is executed by a computer, the computer can implement the channel state information feedback method provided in the foregoing method embodiments.

An embodiment of this application further provides a computer program product. The computer program product is configured to store a computer program. When the computer program is executed by a computer, the computer can implement the channel state information feedback method provided in the foregoing method embodiments.

An embodiment of this application further provides a chip including a processor. The processor is coupled to a memory, and is configured to invoke a program in the memory, so that the chip implements the channel state information feedback method provided in the foregoing method embodiments.

An embodiment of this application further provides a chip. The chip is coupled to a memory, and the chip is configured to implement the channel state information feedback method provided in the foregoing method embodiments.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that each procedure and/or block in the flowcharts and/or block diagrams, and combinations of procedures and/or blocks in the flowcharts and/or block diagrams may be implemented by using computer program instructions. These computer program instructions may be provided to a general-purpose computer, a special-purpose computer, an embedded processor, or a processor of another programmable data processing device, to generate a machine, so that the instructions executed by the computer or the processor of another programmable data processing device generate an apparatus for implementing a specified function in one or more procedures in the flowchart and/or one or more blocks in the block diagram.

Alternatively, these computer program instructions may be stored in a computer-readable memory that can instruct a computer or another programmable data processing device to work in a specific manner, so that the instructions stored in the computer-readable memory generate an artifact including an instruction apparatus. The instruction apparatus implements a specified function in one or more procedures in the flowchart and/or one or more blocks in the block diagram.

Alternatively, these computer program instructions may be loaded to a computer or another programmable data processing device, so that a series of operation steps are performed on the computer or the another programmable device, to generate computer-implemented processing, so that the instructions executed on the computer or the another programmable device provide a step for implementing a specified function in one or more procedures in the flowchart and/or one or more blocks in the block diagram.

It is clear that a person skilled in the art may make various modifications and variations to this application without departing from the scope of this application. Therefore, this application is intended to cover these modifications and variations of this application provided that these modifications and variations fall within the scope of the claims of this application and equivalent technologies thereof.

**Claims**

1. A channel state information feedback method, comprising:

receiving, by a terminal device, a channel state information reference signal CSI-RS from a network device, and performing channel sounding based on the CSI-RS; and
feeding back, by the terminal device, channel state information CSI to the network device based on a first codebook, wherein the first codebook is determined based on one or more transmit-end space-domain and frequency-domain column vectors and one or more receive-end space-domain and time-domain column vectors that represent a channel, or the first codebook is determined based on the one or more transmit-end space-domain and frequency-domain column vectors and one or more time-domain column vectors that represent the channel, the one or more transmit-end space-domain and frequency-domain column vectors indicate channel information in a combination of a transmit-end space domain and frequency domain, and the one or more receive-end space-domain and time-domain column vectors indicate channel information in a combination of a receive-end space domain and time domain.

2. The method according to claim 1, wherein the first codebook meets the following formula:

$$W = W_1 W_2 W_3^H,$$

wherein
W is the first codebook, $W_1$ is a transmit-end space-domain and frequency-domain combined base matrix, the transmit-end space-domain and frequency-domain combined base matrix comprises the one or more transmit-end space-domain and frequency-domain column vectors, $W_3$ is a receive-end space-domain and time-domain combined base matrix, the receive-end space-domain and time-domain combined base matrix comprises the one or more receive-end space-domain and time-domain column vectors, and $W_2$ is a complex coefficient matrix corresponding to the transmit-end space-domain and frequency-domain combined base matrix and the receive-end space-domain and time-domain combined base matrix.

3. The method according to claim 1, wherein the first codebook meets the following formula:

$$W = W_1 W_4 W_5^H,$$

wherein
W is the first codebook, $W_1$ is a transmit-end space-domain and frequency-domain combined base matrix, the transmit-end space-domain and frequency-domain combined base matrix comprises the one or more transmit-end space-domain and frequency-domain column vectors, $W_5$ is a time-domain base matrix, the time-domain base matrix comprises the one or more time-domain column vectors, and $W_4$ is a complex coefficient matrix corresponding to the transmit-end space-domain and frequency-domain combined base matrix and the time-domain base matrix.

4. The method according to claim 2 or 3, wherein the transmit-end space-domain and frequency-domain combined base matrix $W_1$ meets the following formula:

$$W_1 = W_{11}W_{12},$$

wherein

$W_{11}$ is a transmit-end space-domain and frequency-domain combined basic base matrix, each column vector in $W_{11}$ corresponds to one transmit-end space-domain and frequency-domain combined basic base, $W_{12}$ is a transmit-end space-domain and frequency-domain combined basic base correction matrix, and a column vector length of $W_{11}$ is related to a quantity of antennas of the network device and a quantity of frequency-domain resource units occupied by the CSI-RS.

5. The method according to claim 2, wherein the receive-end space-domain and time-domain combined base matrix $W_3$ meets the following formula:

$$W_3 = W_{31}W_{32},$$

wherein

$W_{31}$ is a receive-end space-domain and time-domain combined basic base matrix, each column vector in $W_{31}$ corresponds to one receive-end space-domain and time-domain combined basic base, $W_{32}$ is a receive-end space-domain and time-domain combined basic base correction matrix, and a column vector length of $W_{31}$ is related to a quantity of antennas of the terminal device and sounding duration.

6. The method according to claim 4, wherein one frequency-domain basic base in the transmit-end space-domain and frequency-domain combined basic base matrix corresponds to a plurality of transmit-end space-domain basic bases, or one transmit-end space-domain basic base in the transmit-end space-domain and frequency-domain combined basic base matrix corresponds to a plurality of frequency-domain basic bases.

7. The method according to claim 4 or 6, wherein $W_{11}$ meets the following formula:

$$W_{11} = W_f^* \otimes W_{tx},$$

wherein

$W_f^*$ is a conjugate matrix of $W_f$, $W_f$ indicates a frequency-domain basic base, and $W_{tx}$ indicates a transmit-end space-domain basic base.

8. The method according to claim 5, wherein one time-domain basic base in the receive-end space-domain and time-domain combined basic base matrix corresponds to a plurality of receive-end space-domain basic bases, or one receive-end space-domain basic base in the receive-end space-domain and time-domain combined base matrix corresponds to a plurality of time-domain basic bases.

9. The method according to claim 5 or 8, wherein $W_{31}$ meets the following formula:

$$W_{31} = W_t^* \otimes W_{rx},$$

wherein

$W_t^*$ is a conjugate matrix of $W_t$, $W_t$ indicates a time-domain basic base, and $W_{rx}$ indicates a receive-end space-domain basic base.

10. The method according to claim 2, wherein a dimension of $W_2$ is $L * N_1$, $L$ represents a selected quantity of transmit-end space-domain and frequency-domain combined bases, $L$ is a value preconfigured or predefined by the network device, $N_1$ represents a selected quantity of receive-end space-domain and time-domain combined bases, and $N_1$ is a value preconfigured or predefined by the network device.

11. The method according to claim 3, wherein a dimension of $W_4$ is $L * N_d$, $L$ represents a selected quantity of transmit-end space-domain and frequency-domain combined bases, *L* is a value preconfigured or predefined by the network device, and $N_d$ represents sounding duration.

12. The method according to any one of claims 4, 6, and 7, wherein a feedback period of the transmit-end space-domain and frequency-domain combined basic base correction matrix $W_{12}$ is T1, T1 is a value preconfigured or predefined by the network device, T1 is greater than a period of feeding back first information, and the first information is information that is in the CSI and that is other than information fed back based on $W_{12}$.

13. The method according to any one of claims 1 to 12, wherein the method further comprises:
receiving, by the terminal device, second information from the network device, wherein the second information indicates a codebook type used by the terminal device for channel sounding.

14. A terminal device, comprising:

a transceiver unit, configured to receive a channel state information reference signal CSI-RS from a network device; and
a processing unit, configured to perform channel sounding based on the CSI-RS, wherein
the transceiver unit is further configured to feed back channel state information CSI to the network device based on a first codebook, wherein the first codebook is determined based on one or more transmit-end space-domain and frequency-domain column vectors and one or more receive-end space-domain and time-domain column vectors that represent a channel, or the first codebook is determined based on the one or more transmit-end space-domain and frequency-domain column vectors and one or more time-domain column vectors that represent the channel, the one or more transmit-end space-domain and frequency-domain column vectors indicate channel information in a combination of a transmit-end space domain and frequency domain, and the one or more receive-end space-domain and time-domain column vectors indicate channel information in a combination of a receive-end space domain and time domain.

15. The terminal device according to claim 14, wherein the first codebook meets the following formula:

$$W = W_1 W_2 W_3^H,$$

wherein
W is the first codebook, $W_1$ is a transmit-end space-domain and frequency-domain combined base matrix, the transmit-end space-domain and frequency-domain combined base matrix comprises the one or more transmit-end space-domain and frequency-domain column vectors, $W_3$ is a receive-end space-domain and time-domain combined base matrix, the receive-end space-domain and time-domain combined base matrix comprises the one or more receive-end space-domain and time-domain column vectors, and $W_2$ is a complex coefficient matrix corresponding to the transmit-end space-domain and frequency-domain combined base matrix and the receive-end space-domain and time-domain combined base matrix.

16. The terminal device according to claim 14, wherein the first codebook meets the following formula:

$$W = W_1 W_4 W_5^H,$$

wherein
W is the first codebook, $W_1$ is a transmit-end space-domain and frequency-domain combined base matrix, the transmit-end space-domain and frequency-domain combined base matrix comprises the one or more transmit-end space-domain and frequency-domain column vectors, $W_5$ is a time-domain base matrix, the time-domain base matrix comprises the one or more time-domain column vectors, and $W_4$ is a complex coefficient matrix corresponding to the transmit-end space-domain and frequency-domain combined base matrix and the time-domain base matrix.

17. The terminal device according to claim 15 or 16, wherein the transmit-end space-domain and frequency-domain combined base matrix $W_1$ meets the following formula:

$$W_1 = W_{11} W_{12},$$

wherein

$W_{11}$ is a transmit-end space-domain and frequency-domain combined basic base matrix, each column vector in $W_{11}$ corresponds to one transmit-end space-domain and frequency-domain combined basic base, $W_{12}$ is a transmit-end space-domain and frequency-domain combined basic base correction matrix, and a column vector length of $W_{11}$ is related to a quantity of antennas of the network device and a quantity of frequency-domain resource units occupied by the CSI-RS.

18. The terminal device according to claim 15, wherein the receive-end space-domain and time-domain combined base matrix $W_3$ meets the following formula:

$$W_3 = W_{31}W_{32},$$

wherein

$W_{31}$ is a receive-end space-domain and time-domain combined basic base matrix, each column vector in $W_{31}$ corresponds to one receive-end space-domain and time-domain combined basic base, $W_{32}$ is a receive-end space-domain and time-domain combined basic base correction matrix, and a column vector length of $W_{31}$ is related to a quantity of antennas of the terminal device and sounding duration.

19. The terminal device according to claim 17, wherein one frequency-domain basic base in the transmit-end space-domain and frequency-domain combined basic base matrix corresponds to a plurality of transmit-end space-domain basic bases, or one transmit-end space-domain basic base in the transmit-end space-domain and frequency-domain combined base matrix corresponds to a plurality of frequency-domain basic bases.

20. The terminal device according to claim 17 or 19, wherein $W_{11}$ meets the following formula:

$$W_{11} = W_f^* \otimes W_{tx},$$

wherein

$W_f^*$ is a conjugate matrix of $W_f$, $W_f$ indicates a frequency-domain basic base, and $W_{tx}$ indicates a transmit-end space-domain basic base.

21. The terminal device according to claim 18, wherein one time-domain basic base in the receive-end space-domain and time-domain combined basic base matrix corresponds to a plurality of receive-end space-domain basic bases, or one receive-end space-domain basic base in the receive-end space-domain and time-domain combined base matrix corresponds to a plurality of time-domain basic bases.

22. The terminal device according to claim 18 or 21, wherein $W_{31}$ meets the following formula:

$$W_{31} = W_t^* \otimes W_{rx},$$

wherein

$W_t^*$ is a conjugate matrix of $W_t$, $W_t$ indicates a time-domain basic base, and $W_{rx}$ indicates a receive-end space-domain basic base.

23. The terminal device according to claim 15, wherein a dimension of $W_2$ is $L * N_1$, L represents a selected quantity of transmit-end space-domain and frequency-domain combined bases, L is a value preconfigured or predefined by the network device, $N_1$ represents a selected quantity of receive-end space-domain and time-domain combined bases, and $N_1$ is a value preconfigured or predefined by the network device.

24. The terminal device according to claim 16, wherein a dimension of $W_4$ is $L * N_d$, L represents a selected quantity of transmit-end space-domain and frequency-domain combined bases, L is a value preconfigured or predefined by the network device, and $N_d$ represents sounding duration.

**25.** The terminal device according to any one of claims 17, 19, and 20, wherein a feedback period of the transmit-end space-domain and frequency-domain combined basic base correction matrix $W_{12}$ is T1, T1 is a value preconfigured or predefined by the network device, T1 is greater than a period of feeding back first information, and the first information is information that is in the CSI and that is other than information fed back based on $W_{12}$.

**26.** The terminal device according to any one of claims 14 to 25, wherein the transceiver unit is further configured to: receive second information from the network device, wherein the second information indicates a codebook type used by the terminal device for channel sounding.

**27.** A terminal device, comprising a processor and a transceiver, wherein

the transceiver is configured to receive and/or send a signal or information; and
the processor is coupled to a memory, and is configured to invoke computer instructions in the memory, so that the terminal device performs the method according to any one of claims 1 to 13.

**28.** A terminal device, comprising a processor and a memory, wherein

the memory is configured to store computer instructions; and
the processor is configured to invoke the computer instructions in the memory, so that the terminal device performs the method according to any one of claims 1 to 13.

**29.** A channel state information feedback method, comprising:

sending, by a network device, a channel state information reference signal CSI-RS to a terminal device; and
receiving, by the network device, channel state information CSI that is fed back by the terminal device based on a first codebook, wherein the first codebook is determined based on one or more transmit-end space-domain and frequency-domain column vectors and one or more receive-end space-domain and time-domain column vectors that represent a channel, or the first codebook is determined based on the one or more transmit-end space-domain and frequency-domain column vectors and one or more time-domain column vectors that represent the channel, the one or more transmit-end space-domain and frequency-domain column vectors indicate channel information in a combination of a transmit-end space domain and frequency domain, and the one or more receive-end space-domain and time-domain column vectors indicate channel information in a combination of a receive-end space domain and time domain.

**30.** The method according to claim 29, wherein the first codebook meets the following formula:

$$W = W_1 W_2 W_3^H,$$

wherein
W is the first codebook, $W_1$ is a transmit-end space-domain and frequency-domain combined base matrix, the transmit-end space-domain and frequency-domain combined base matrix comprises the one or more transmit-end space-domain and frequency-domain column vectors, $W_3$ is a receive-end space-domain and time-domain combined base matrix, the receive-end space-domain and time-domain combined base matrix comprises the one or more receive-end space-domain and time-domain column vectors, and $W_2$ is a complex coefficient matrix corresponding to the transmit-end space-domain and frequency-domain combined base matrix and the receive-end space-domain and time-domain combined base matrix.

**31.** The method according to claim 29, wherein the first codebook meets the following formula:

$$W = W_1 W_4 W_5^H,$$

wherein
W is the first codebook, $W_1$ is a transmit-end space-domain and frequency-domain combined base matrix, the transmit-end space-domain and frequency-domain combined base matrix comprises the one or more transmit-end space-domain and frequency-domain column vectors, $W_5$ is a time-domain base matrix, the time-domain base matrix comprises the one or more time-domain column vectors, and $W_4$ is a complex coefficient matrix corresponding to the transmit-end space-domain and frequency-domain combined base matrix and the time-domain base matrix.

32. The method according to claim 30 or 31, wherein the transmit-end space-domain and frequency-domain combined base matrix $W_1$ meets the following formula:

$$W_1 = W_{11}W_{12},$$

wherein

$W_{11}$ is a transmit-end space-domain and frequency-domain combined basic base matrix, each column vector in $W_{11}$ corresponds to one transmit-end space-domain and frequency-domain combined basic base, $W_{12}$ is a transmit-end space-domain and frequency-domain combined basic base correction matrix, and a column vector length of $W_{11}$ is related to a quantity of antennas of the network device and a quantity of frequency-domain resource units occupied by the CSI-RS.

33. The method according to claim 31, wherein the receive-end space-domain and time-domain combined base matrix $W_3$ meets the following formula:

$$W_3 = W_{31}W_{32},$$

wherein

$W_{31}$ is a receive-end space-domain and time-domain combined basic base matrix, each column vector in $W_{31}$ corresponds to one receive-end space-domain and time-domain combined basic base, $W_{32}$ is a receive-end space-domain and time-domain combined basic base correction matrix, and a column vector length of $W_{31}$ is related to a quantity of antennas of the terminal device and sounding duration.

34. The method according to claim 32, wherein one frequency-domain basic base in the transmit-end space-domain and frequency-domain combined basic base matrix corresponds to a plurality of transmit-end space-domain basic bases, or one transmit-end space-domain basic base in the transmit-end space-domain and frequency-domain combined base matrix corresponds to a plurality of frequency-domain basic bases.

35. The method according to claim 32 or 34, wherein $W_{11}$ meets the following formula:

$$W_{11} = W_f^* \otimes W_{tx},$$

wherein

$W_f^*$ is a conjugate matrix of $W_f$, $W_f$ indicates a frequency-domain basic base, and $W_{tx}$ indicates a transmit-end space-domain basic base.

36. The method according to claim 33, wherein one time-domain basic base in the receive-end space-domain and time-domain combined basic base matrix corresponds to a plurality of receive-end space-domain basic bases, or one receive-end space-domain basic base in the receive-end space-domain and time-domain combined base matrix corresponds to a plurality of time-domain basic bases.

37. The method according to claim 33 or 36, wherein $W_{31}$ meets the following formula:

$$W_{31} = W_t^* \otimes W_{rx},$$

wherein

$W_t^*$ is a conjugate matrix of $W_t$, $W_t$ indicates a time-domain basic base, and $W_{rx}$ indicates a receive-end space-domain basic base.

38. The method according to claim 30, wherein a dimension of $W_2$ is $L * N_1$, L represents a selected quantity of transmit-end space-domain and frequency-domain combined bases, L is a value preconfigured or predefined by the network device, $N_1$ represents a selected quantity of receive-end space-domain and time-domain combined bases, and $N_1$ is a value preconfigured or predefined by the network device.

**39.** The method according to claim 31, wherein a dimension of $W_4$ is $L * N_d$, $L$ represents a selected quantity of transmit-end space-domain and frequency-domain combined bases, L is a value preconfigured or predefined by the network device, and $N_d$ represents sounding duration.

**40.** The method according to any one of claims 32, 34, and 35, wherein a feedback period of the transmit-end space-domain and frequency-domain combined basic base correction matrix $W_{12}$ is T1, T1 is a value preconfigured or predefined by the network device, T1 is greater than a period of feeding back first information, and the first information is information that is in the CSI and that is other than information fed back based on $W_{12}$.

**41.** The method according to any one of claims 29 to 40, wherein the method further comprises:
sending, by the network device, second information to the terminal device, wherein the second information indicates a codebook type used by the terminal device for channel sounding.

**42.** A network device, comprising:

a transceiver unit, configured to send a channel state information reference signal CSI-RS to a terminal device, and receive channel state information CSI that is fed back by the terminal device based on a first codebook, wherein the first codebook is determined based on one or more transmit-end space-domain and frequency-domain column vectors and one or more receive-end space-domain and time-domain column vectors that represent a channel, or the first codebook is determined based on the one or more transmit-end space-domain and frequency-domain column vectors and one or more time-domain column vectors that represent the channel, the one or more transmit-end space-domain and frequency-domain column vectors indicate channel information in a combination of a transmit-end space domain and frequency domain, and the one or more receive-end space-domain and time-domain column vectors indicate channel information in a combination of a receive-end space domain and time domain; and
a processing unit, configured to control the transceiver unit to perform sending and receiving operations.

**43.** The network device according to claim 42, wherein the first codebook meets the following formula:

$$W = W_1 W_2 W_3^H,$$

wherein
W is the first codebook, $W_1$ is a transmit-end space-domain and frequency-domain combined base matrix, the transmit-end space-domain and frequency-domain combined base matrix comprises the one or more transmit-end space-domain and frequency-domain column vectors, $W_3$ is a receive-end space-domain and time-domain combined base matrix, the receive-end space-domain and time-domain combined base matrix comprises the one or more receive-end space-domain and time-domain column vectors, and $W_2$ is a complex coefficient matrix corresponding to the transmit-end space-domain and frequency-domain combined base matrix and the receive-end space-domain and time-domain combined base matrix.

**44.** The network device according to claim 42, wherein the first codebook meets the following formula:

$$W = W_1 W_4 W_5^H,$$

wherein
W is the first codebook, $W_1$ is a transmit-end space-domain and frequency-domain combined base matrix, the transmit-end space-domain and frequency-domain combined base matrix comprises the one or more transmit-end space-domain and frequency-domain column vectors, $W_5$ is a time-domain base matrix, the time-domain base matrix comprises the one or more time-domain column vectors, and $W_4$ is a complex coefficient matrix corresponding to the transmit-end space-domain and frequency-domain combined base matrix and the time-domain base matrix.

**45.** The network device according to claim 43 or 44, wherein the transmit-end space-domain and frequency-domain

combined base matrix $W_1$ meets the following formula:

$$W_1 = W_{11}W_{12},$$

wherein

$W_{11}$ is a transmit-end space-domain and frequency-domain combined basic base matrix, each column vector in $W_{11}$ corresponds to one transmit-end space-domain and frequency-domain combined basic base, $W_{12}$ is a transmit-end space-domain and frequency-domain combined basic base correction matrix, and a column vector length of $W_{11}$ is related to a quantity of antennas of the network device and a quantity of frequency-domain resource units occupied by the CSI-RS.

46. The network device according to claim 44, wherein the receive-end space-domain and time-domain combined base matrix $W_3$ meets the following formula:

$$W_3 = W_{31}W_{32},$$

wherein

$W_{31}$ is a receive-end space-domain and time-domain combined basic base matrix, each column vector in $W_{31}$ corresponds to one receive-end space-domain and time-domain combined basic base, $W_{32}$ is a receive-end space-domain and time-domain combined basic base correction matrix, and a column vector length of $W_{31}$ is related to a quantity of antennas of the terminal device and sounding duration.

47. The network device according to claim 45, wherein one frequency-domain basic base in the transmit-end space-domain and frequency-domain combined basic base matrix corresponds to a plurality of transmit-end space-domain basic bases, or one transmit-end space-domain basic base in the transmit-end space-domain and frequency-domain combined base matrix corresponds to a plurality of frequency-domain basic bases.

48. The network device according to claim 45 or 47, wherein $W_{11}$ meets the following formula:

$$W_{11} = W_f^* \otimes W_{tx},$$

wherein

$W_f^*$ is a conjugate matrix of $W_f$, $W_f$ indicates a frequency-domain basic base, and $W_{tx}$ indicates a transmit-end space-domain basic base.

49. The network device according to claim 46, wherein one time-domain basic base in the receive-end space-domain and time-domain combined basic base matrix corresponds to a plurality of receive-end space-domain basic bases, or one receive-end space-domain basic base in the receive-end space-domain and time-domain combined base matrix corresponds to a plurality of time-domain basic bases.

50. The network device according to claim 46 or 49, wherein $W_{31}$ meets the following formula:

$$W_{31} = W_t^* \otimes W_{rx},$$

wherein

$W_t^*$ is a conjugate matrix of $W_t$, $W_t$ indicates a time-domain basic base, and $W_{rx}$ indicates a receive-end space-domain basic base.

51. The network device according to claim 43, wherein a dimension of $W_2$ is $L * N_1$, L represents a selected quantity of transmit-end space-domain and frequency-domain combined bases, L is a value preconfigured or predefined by the network device, $N_1$ represents a selected quantity of receive-end space-domain and time-domain combined bases, and $N_1$ is a value preconfigured or predefined by the network device.

52. The network device according to claim 44, wherein a dimension of $W_4$ is $L * N_d$, $L$ represents a selected quantity of transmit-end space-domain and frequency-domain combined bases, $L$ is a value preconfigured or predefined by the network device, and $N_d$ represents sounding duration.

53. The network device according to any one of claims 45, 47, and 48, wherein a feedback period of the transmit-end space-domain and frequency-domain combined basic base correction matrix $W_{12}$ is T1, T1 is a value preconfigured or predefined by the network device, T1 is greater than a period of feeding back first information, and the first information is information that is in the CSI and that is other than information fed back based on $W_{12}$.

54. The network device according to any one of claims 42 to 53, wherein the transceiver unit is further configured to: send second information to the terminal device, wherein the second information indicates a codebook type used by the terminal device for channel sounding.

55. A network device, comprising a processor and a transceiver, wherein

the transceiver is configured to receive and/or send a signal or information; and
the processor is coupled to a memory, and is configured to invoke computer instructions in the memory, so that the terminal device performs the method according to any one of claims 29 to 41.

56. A network device, comprising a processor and a memory, wherein

the memory is configured to store computer instructions; and
the processor is configured to invoke the computer instructions in the memory, so that the terminal device performs the method according to any one of claims 29 to 41.

57. A channel state information feedback method, comprising:

receiving, by a terminal device, a channel state information reference signal CSI-RS from a network device, and performing channel sounding based on the CSI-RS; and
feeding back, by the terminal device, channel state information to the network device, wherein the channel state information indicates one or more first bases, and the one or more first bases are used to generate, based on a preset base generation method, one or more second bases indicating the channel state information.

58. The method according to claim 57, wherein the one or more first bases are one or more space-domain and frequency-domain combined statistical covariance base column vectors obtained through quantization.

59. The method according to claim 57 or 58, wherein the preset base generation method is an orthogonalization method preconfigured or predefined by the network device.

60. A channel state information feedback method, comprising:

sending, by a network device, a channel state information reference signal CSI-RS to a terminal device; and
receiving, by the network device, channel state information fed back by the terminal device, wherein the channel state information indicates one or more first bases, and the one or more first bases are used to generate, based on a preset base generation method, one or more second bases indicating the channel state information.

61. The method according to claim 60, wherein the one or more first bases are one or more space-domain and frequency-domain combined statistical covariance base column vectors obtained through quantization.

62. The method according to claim 60 or 61, wherein the preset base generation method is an orthogonalization method preconfigured or predefined by the network device.

63. A terminal device, comprising:

a transceiver unit, configured to receive a channel state information reference signal CSI-RS from a network device; and
a processing unit, configured to perform channel sounding based on the CSI-RS, wherein
the transceiver unit is further configured to feed back channel state information to the network device, wherein the channel state information indicates one or more first bases, and the one or more first bases are used to generate, based on a preset base generation method, one or more second bases indicating the channel state information.

64. The terminal device according to claim 63, wherein the one or more first bases are one or more space-domain and frequency-domain combined statistical covariance base column vectors obtained through quantization.

65. The terminal device according to claim 63 or 64, wherein the preset base generation method is an orthogonalization method preconfigured or predefined by the network device.

66. A network device, comprising:

a transceiver unit, configured to send a channel state information reference signal CSI-RS to a terminal device, and receive channel state information fed back by the terminal device, wherein the channel state information indicates one or more first bases, and the one or more first bases are used to generate, based on a preset base generation method, one or more second bases indicating the channel state information; and
a processing unit, configured to control sending and receiving operations of the transceiver unit.

67. The network device according to claim 66, wherein the one or more first bases are one or more space-domain and frequency-domain combined statistical covariance base column vectors obtained through quantization.

68. The network device according to claim 66 or 67, wherein the preset base generation method is an orthogonalization method preconfigured or predefined by the network device.

69. A terminal device, comprising a processor and a transceiver, wherein

the transceiver is configured to receive and/or send a signal or information; and
the processor is coupled to a memory, and is configured to invoke computer instructions in the memory, so that the terminal device performs the method according to any one of claims 57 to 59.

70. A terminal device, comprising a processor and a memory, wherein

the memory is configured to store computer instructions; and
the processor is configured to invoke the computer instructions in the memory, so that the terminal device performs the method according to any one of claims 57 to 59.

71. A network device, comprising a processor and a transceiver, wherein

the transceiver is configured to receive and/or send a signal or information; and
the processor is coupled to a memory, and is configured to invoke computer instructions in the memory, so that the terminal device performs the method according to any one of claims 60 to 62.

72. A network device, comprising a processor and a memory, wherein

the memory is configured to store computer instructions; and
the processor is configured to invoke the computer instructions in the memory, so that the terminal device performs the method according to any one of claims 60 to 62.

73. A communications system, comprising the terminal device according to any one of claims 14 to 28, any one of claims 63 to 65, claim 69, or claim 70, and the network device according to any one of claims 42 to 56, any one of claims 66 to 68, claim 71, or claim 72.

74. A computer-readable storage medium, wherein the computer-readable storage medium stores computer-executable instructions, and when the computer-executable instructions are invoked by a computer, the computer-executable instructions are used to enable the computer to perform the method according to any one of claims 1 to 13, any one of claims 29 to 41, or any one of claims 57 to 62.

75. A computer program product comprising instructions, wherein when the computer program product is run on a computer, the computer is enabled to perform the method according to any one of claims 1 to 13, any one of claims 29 to 41, or any one of claims 57 to 62.

76. A chip, wherein the chip is coupled to a memory, and is configured to read and execute program instructions stored in the memory, to implement the method according to any one of claims 1 to 13, any one of claims 29 to 41, or any one of claims 57 to 62.

FIG. 1

FIG. 2

301: Channel sounding
configuration information

302: Channel sounding pilot (RS)

303: Feed back CSI based on
a pilot-based sounding result

304: Send data based on the CSI fed
back by the terminal device

Network device

Terminal device

FIG. 3

T3: location 3

v2

T2: location 2

CSI

v1

T1: location 1

FIG. 4

t1 t2

Network device

CSI-RS

Report CSI

Terminal device

FIG. 5

| Network device | | Terminal device |

601: CSI-RS

602: Perform channel
sounding based on the CSI-RS

603: Feed back channel state
information based on a first codebook

604: Reconstruct, based on the channel state
information fed back by the terminal device
and the first codebook, a channel present at
a plurality of time points within sounding
duration, perform future channel prediction
based on the channel present at the plurality
of time points within the sounding duration,
and determine a precoding matrix

FIG. 6

Tx–delay domain

Change of a Tx-delay-Rx pair in time domain

Rx–Doppler domain

$$H = \sum_{tx,f,rx,d} a_{s_{tx\_f},s_{rx\_d}} \overrightarrow{s_{tx\_f}} \otimes \overrightarrow{s_{rx\_d}}$$

Tx-delay

Rx-Doppler

FIG. 7

Tx–delay
domain

Change of a Tx-delay
pair in time domain

Doppler domain

$$H = \sum_{tx,f,d} a_{s_{tx\_f},s_d} \overrightarrow{s_{tx\_f}} \otimes \overrightarrow{s_d}$$

Tx-delay

Doppler

FIG. 8

| Network device | | Terminal device |
|---|---|---|

901: CSI-RS

902: Perform channel sounding based on the CSI-RS

903: Channel state information

FIG. 9

1000

Channel state information feedback apparatus

1001

1002

| Transceiver unit | Processing unit |
|---|---|

FIG. 10

1100

Channel state information feedback apparatus

1101

1102

| Transceiver | Processor |
|---|---|

1104

1103

Memory

FIG. 11

## INTERNATIONAL SEARCH REPORT

International application No.

**PCT/CN2022/095178**

| A. | CLASSIFICATION OF SUBJECT MATTER |
| --- | --- |

H04B 7/0417(2017.01)i; H04B 7/0456(2017.01)i

According to International Patent Classification (IPC) or to both national classification and IPC

| B. | FIELDS SEARCHED |
| --- | --- |

Minimum documentation searched (classification system followed by classification symbols)

H04B;H04L;H04W

Documentation searched other than minimum documentation to the extent that such documents are included in the fields searched

Electronic data base consulted during the international search (name of data base and, where practicable, search terms used)

CNTXT; CNKI; VEN; ENTXT; 3GPP: 信道状态信息, 测量, 反馈, 空域, 频域, 空频, 时域, 空时, 联合, 矩阵, 基, 向量, 列, 多普勒, 延迟, 量化, 压缩, channel state information, measure, feedback, space domain, frequency domain, time domain, joint, matrix, basis, vector, column, doppler, delay, quantit+, CSI, SD, FD, DD

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112583501 A (HUAWEI TECHNOLOGIES CO., LTD.) 30 March 2021 (2021-03-30) description, paragraphs 148-527 | 57-76 |
| A | CN 112583501 A (HUAWEI TECHNOLOGIES CO., LTD.) 30 March 2021 (2021-03-30) ditto | 1-56 |
| A | US 2021143885 A1 (FRAUNHOFER GESELLSCHAFT ZUR FORDERUNG DER ANGEWANDTEN FORSCHUNG E.V.) 13 May 2021 (2021-05-13) entire document | 1-76 |
| A | WO 2021028425 A1 (FRAUNHOFER GESELLSCHAFT ZUR FORDERUNG DER ANGEWANDTEN FORSCHUNG E.V.) 18 February 2021 (2021-02-18) entire document | 1-76 |
| A | CN 112075031 A (SAMSUNG ELECTRONICS CO., LTD.) 11 December 2020 (2020-12-11) entire document | 1-76 |
| A | CN 112751592 A (HUAWEI TECHNOLOGIES CO., LTD.) 04 May 2021 (2021-05-04) entire document | 1-76 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **19 August 2022** | **05 September 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/095178** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 112910807 A (HUAZHONG UNIVERSITY OF SCIENCE AND TECHNOLOGY) 04 June 2021 (2021-06-04)<br>        entire document | 1-76 |
| A | CN 111510189 A (HUAWEI TECHNOLOGIES CO., LTD.) 07 August 2020 (2020-08-07)<br>        entire document | 1-76 |
| A | CN 111010249 A (HUAZHONG UNIVERSITY OF SCIENCE AND TECHNOLOGY) 14 April 2020 (2020-04-14)<br>        entire document | 1-76 |
| A | VIVO. ""R1-2102512_Further discussion and evaluation on MTRP CSI and Partial reciprocity_final""<br>*3GPP TSG RAN WG1#104b-e*, 06 April 2021 (2021-04-06),<br>        entire document | 1-76 |
| A | Moderator. ""R1-2101884 FL's summary for CSI enhancements MTRP and FR1 FDD reciprocity_V43_QC_FHG""<br>*3GPP TSG RAN WG1 Meeting #104-e*, 28 January 2021 (2021-01-28),<br>        entire document | 1-76 |
| A | Huawei et al. ""R1-2007268 Technical Categorization for CSI enhancements MTRP and FR1 FDD reciprocity_V25_FL""<br>*3GPP TSG RAN WG1 Meeting #102-e*, 29 August 2020 (2020-08-29),<br>        entire document | 1-76 |

Form PCT/ISA/210 (second sheet) (January 2015)

| International application No. |
| --- |
| **PCT/CN2022/095178** |

| Patent document cited in search report | | | Publication date (day/month/year) | Patent family member(s) | | | Publication date (day/month/year) |
| --- | --- | --- | --- | --- | --- | --- | --- |
| CN | 112583501 | A | 30 March 2021 | None | | | |
| US | 2021143885 | A1 | 13 May 2021 | EP | 3804157 | A1 | 14 April 2021 |
| | | | | JP | 2021525988 | A | 27 September 2021 |
| | | | | EP | 3576312 | A1 | 04 December 2019 |
| | | | | KR | 20210014698 | A | 09 February 2021 |
| | | | | CN | 112514276 | A | 16 March 2021 |
| | | | | WO | 2019229152 | A1 | 05 December 2019 |
| WO | 2021028425 | A1 | 18 February 2021 | EP | 4018585 | A1 | 29 June 2022 |
| | | | | CN | 114270722 | A | 01 April 2022 |
| | | | | KR | 20220048476 | A | 19 April 2022 |
| | | | | CN | 114223145 | A | 22 March 2022 |
| | | | | EP | 3780455 | A1 | 17 February 2021 |
| | | | | EP | 3780456 | A1 | 17 February 2021 |
| | | | | KR | 20220048475 | A | 19 April 2022 |
| | | | | EP | 4014403 | A1 | 22 June 2022 |
| | | | | WO | 2021028284 | A1 | 18 February 2021 |
| CN | 112075031 | A | 11 December 2020 | EP | 3776892 | A1 | 17 February 2021 |
| | | | | KR | 20200136983 | A | 08 December 2020 |
| | | | | WO | 2019209088 | A1 | 31 October 2019 |
| | | | | US | 2019334587 | A1 | 31 October 2019 |
| | | | | None | | | |
| CN | 112751592 | A | 04 May 2021 | None | | | |
| CN | 112910807 | A | 04 June 2021 | None | | | |
| CN | 111510189 | A | 07 August 2020 | WO | 2020156103 | A1 | 06 August 2020 |
| CN | 111010249 | A | 14 April 2020 | None | | | |

Form PCT/ISA/210 (patent family annex) (January 2015)

## REFERENCES CITED IN THE DESCRIPTION

**Patent documents cited in the description**

- CN 202110664838